# EUROPÄISCHE PATENTSCHRIFT

(11) **EP 3 280 895 B1**
(45) Veröffentlichungstag und Bekanntmachung des Hinweises auf die Patenterteilung: **30.12.2020**
(21) Anmeldenummer: 16712012.0
(22) Anmeldetag: 21.03.2016
(51) Int. Cl.: F02D 41/14, F02D 41/24, F02D 41/26, F02D 41/38, F02D 41/40

(54) **VERFAHREN UND STEUERVORRICHTUNG ZUM ERMITTELN EINER ENERGIEEINBRINGUNGS-ZIELGRÖSSE EINER VERBRENNUNGSKRAFTMASCHINE**
METHOD AND CONTROLLER FOR ASCERTAINING AN ENERGY INPUT TARGET VARIABLE OF AN INTERNAL COMBUSTION ENGINE
PROCÉDÉ ET DISPOSITIF DE COMMANDE POUR DÉTERMINER UN OBJECTIF D'APPORT D'ÉNERGIE D'UN MOTEUR À COMBUSTION INTERNE

(30) Priorität: 09.04.2015 DE 102015206358
(43) Veröffentlichungstag der Anmeldung: 14.02.2018
(73) Patentinhaber: Volkswagen Aktiengesellschaft, 38440 Wolfsburg (DE)
(72) Erfinder: JESCHKE, Jens, 38106 Braunschweig (DE); PIEWEK, Jan, 39128 Magdeburg (DE)
(74) Vertreter: MFG Patentanwälte Meyer-Wildhagen Meggle-Freund Gerhard PartG mbB
(86) Internationale Anmeldenummer: PCT/EP2016/056171
(87) Internationale Veröffentlichungsnummer: WO 2016/162199

(56) Entgegenhaltungen:
- DE-A1-102004 001 118
- DE-A1-102008 000 012
- DE-A1-102008 004 361
- DE-A1-102008 041 346
- DE-A1-102011 054 005

## Beschreibung

Die Erfindung betrifft ein Verfahren und eine Steuervorrichtung zum Ermitteln einer Energieeinbringungs-Zielgröße zum Formen eines einem relativen Soll-Energieumsetzungsverlauf zumindest zu einem vorbestimmten Grad entsprechenden relativen Energieumsetzungsverlaufs einer Verbrennungskraftmaschine. Die Erfindung betrifft weiterhin ein Verfahren zum Bestimmen einer absoluten Energieeinbringungsgröße zum Betreiben der Verbrennungskraftmaschine.

Um während des Betriebs einer Verbrennungskraftmaschine deren Verbrauch und Emissionen zu reduzieren und deren Leistung und Komfort zu optimieren, muss diese gezielt angesteuert werden. Dazu ist mitunter eine komplizierte Bestimmung von Einspritzparametern und des Raildrucks bei Verbrennungskraftmaschinen mit Common-Rail-System notwendig.

In einem Druckverlauf, einem Brennverlauf oder einem Heizverlauf überlagern sich verschiedene Effekte der Verbrennung, wie eine gewünschte Verbrennungsschwerpunktlage, ein gewünschtes Gesamtmoment und eine gewünschte Form der Verbrennung. Auf Grundlage von Abweichungen eines gemessenen Brennverlaufs von einem gewünschten Brennverlauf (Soll-Brennverlauf) können Einspritzparameter unter gleichzeitiger Berücksichtigung dieser Effekte bestimmt werden, wie beispielsweise die DE 10 2007 013 119 A1 und die DE 10 2011 103 707 A1 beschreiben. Die DE 10 2005 017 348 A1 und die DE 10 2005 025 737 A1 offenbaren die Bestimmung von Einspritzparametern in Abhängigkeit eines Emissionswerts der Verbrennungskraftmaschine. Die DE 10 2008 041 346 A1 beschreibt ein Verfahren zum Bestimmen einer Kraftstoffmenge für eine Hauptverbrennung während eines Verbrennungszyklus in Abhängigkeit einer Vorverbrennung. Weitere Verfahren zum Bestimmen einer Kraftstoffmenge werden in der DE 10 2008 000 012 A1 und der DE 10 2004 001 118 A1 beschrieben. Die DE 10 2011 054 005 A1 beschreibt ein Verfahren zur Detektion einer Verbrennungsphase. Die DE 10 2008 004 361 A1 offenbart ein Verfahren zur Regelung eines Verbrennungsmotors mittels eines Sollwerts eines Verbrennungslagemerkmals des Verbrennungsvorgangs.

Allerdings sind die so bestimmten Einspritzparameter nur in Bezug auf einen einzigen Soll-Brennverlauf definiert und daher nur für einen konkreten Betriebspunkt der Verbrennungskraftmaschine gültig. Für einen anderen Betriebspunkt ist nebst einem zugehörigen individuellen Soll-Brennverlauf eine erneute vollständige Bestimmung von Einspritzparametern notwendig.

Die Einspritzparameter einer Verbrennungskraftmaschine können alternativ auch, wie aus der DE 10 2007 034 340 A1 hervorgeht, über Vibe-Funktionen oder, wie aus der DE 10 2012 018 617 B3 oder der DE 197 49 816 B4 hervorgeht, mit Hilfe von durch Messwerte gestützten Modellen berechnet werden. Auf Grundlage solcher Verfahren zum Bestimmen von Einspritzparametern lässt sich die Verbrennungskraftmaschine jedoch nicht ausreichend genau ansteuern.

Aufgabe der vorliegenden Erfindung ist es, Verfahren und eine Steuervorrichtung bereitzustellen, die die oben genannten Nachteile wenigstens teilweise überwinden.

Diese Aufgabe wird durch das erfindungsgemäße Verfahren zum Ermitteln einer Energieeinbringungs-Zielgröße nach Anspruch 1, das Verfahren zum Bestimmen einer absoluten Energieeinbringungsgröße zum Betreiben der Verbrennungskraftmaschine nach Anspruch 8 und die Steuervorrichtung zum Ermitteln einer Energieeinbringungs-Zielgröße nach Anspruch 9 gelöst.

Gemäß einem ersten Aspekt betrifft die vorliegende Erfindung ein Verfahren zum Ermitteln einer Energieeinbringungs-Zielgröße zum Formen eines einem relativen Soll-Energieumsetzungsverlauf zumindest zu einem vorbestimmten Grad entsprechenden relativen Energieumsetzungsverlaufs einer Verbrennungskraftmaschine, umfassend:
Erhalten des relativen Soll-Energieumsetzungsverlaufs der Verbrennungskraftmaschine;
Bereitstellen einer Ist-Energieeinbringungsgröße;
Erhalten eines relativen Ist-Energieumsetzungsverlaufs der Verbrennungskraftmaschine, dem die bereitgestellte Ist-Energieeinbringungsgröße zugrunde liegt; und
Bestimmen der Energieeinbringungs-Zielgröße auf Grundlage des relativen Soll-Energieumsetzungsverlaufs und des relativen Ist-Energieumsetzungsverlaufs.

Gemäß einem zweiten Aspekt betrifft die vorliegende Erfindung ein Verfahren zum Bestimmen einer absoluten Energieeinbringungsgröße zum Betreiben einer Verbrennungskraftmaschine, umfassend:
Ermitteln eines ersten Teilverlaufsabschnitts eines Energieeinbringungsverlaufs, über den die absolute Lage des Energieumsetzungsverlaufs einstellbar ist;
Ermitteln eines zweiten Teilverlaufsabschnitts des Energieeinbringungsverlaufs, über den die absolute Energie des Energieumsetzungsverlaufs einstellbar ist;
Bestimmen einer Energieeinbringungs-Zielgröße zum Formen eines einem relativen Soll-Energieumsetzungsverlauf zumindest zu einem vorbestimmten Grad entsprechenden relativen Energieumsetzungsverlaufs einer Verbrennungskraftmaschine; und
Ermitteln der absoluten Energieeinbringungsgröße zum Betreiben der Verbrennungskraftmaschine auf Grundlage des ersten Teilverlaufsabschnitts, des zweiten Teilverlaufsabschnitts und der Energieeinbringungs-Zielgröße.

Gemäß einem weiteren Aspekt betrifft die vorliegende Erfindung eine Steuervorrichtung zum Ermitteln einer Energieeinbringungs-Zielgröße zum Formen eines einem relativen Soll-Energieumsetzungsverlauf zumindest zu einem vorbestimmten Grad entsprechenden relativen Energieumsetzungsverlaufs einer Verbrennungskraftmaschine, die dazu ausgebildet ist, ein Verfahren nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Gemäß dem erfindungsgemäßen Verfahren zum Ermitteln einer Energieeinbringungs-Zielgröße zum Formen eines einem relativen Soll-Energieumsetzungsverlauf zumindest zu einem vorbestimmten Grad entsprechenden relativen Energieumsetzungsverlaufs einer Verbrennungskraftmaschine wird der relative Soll-Energieumsetzungsverlauf der Verbrennungskraftmaschine erhalten. Weiterhin wird eine Ist-Energieeinbringungsgröße bereitgestellt und ein relativer Ist-Energieumsetzungsverlauf der Verbrennungskraftmaschine erhalten, dem die bereitgestellte Ist-Energieeinbringungsgröße zugrunde liegt. Auf Grundlage des relativen Soll-Energieumsetzungsverlaufs und des relativen Ist-Energieumsetzungsverlaufs wird dann die Energieeinbringungs-Zielgröße bestimmt.

Durch die Bestimmung der Energieeinbringungs-Zielgröße auf Grundlage des relativen Soll-Energieumsetzungsverlaufs und des relativen Ist-Energieumsetzungsverlaufs ist die Energieeinbringungs-Zielgröße in weiten Betriebsbereichen der Verbrennungskraftmaschine gültig, beispielsweise bei Lastpunktvariationen. Weiterhin ist zum Ablegen der relativen Energieumsetzungsverläufe wesentlich weniger Speicherplatz notwendig als zum Ablegen einer Vielzahl an absoluten Energieumsetzungsverläufen. Zudem ist die Energieeinbringungs-Zielgröße von der Ermittlung eines ersten Teilverlaufsabschnitts eines Energieeinbringungsverlaufs, über den die absolute Lage des Energieumsetzungsverlaufs einstellbar ist, beispielsweise eines Ansteuerbeginns einer Haupteinspritzung, und eines zweiten Teilverlaufsabschnitts des Energieeinbringungsverlaufs, über den die absolute umgesetzte Energie des Energieumsetzungsverlaufs einstellbar ist, beispielsweise einer Menge der Haupteinspritzung, um eine Verbrennung mit einer gewünschten absoluten Lage und einer absoluten umgesetzten Energie zu erhalten, entkoppelt, sodass während der Bestimmung der Energieeinbringungs-Zielgröße ein grundsätzlicher dynamischer Betrieb des Motors aufrecht erhalten werden kann.

Die Energieeinbringungs-Zielgröße enthält vorzugsweise einen oder mehrere diskrete Parameter zur Ansteuerung eines Einspritzsystems, einen Raildruck und/oder zur Ansteuerung des Einspritzsystems verwendbare zeitliche Verläufe, die einen relativen Verlauf einer Größe, die für eine einer gewünschten Verbrennung bzw. einer Soll-Verbrennung ähnliche Verbrennung charakteristisch ist, beeinflussen. Beispielsweise kann die Energieeinbringungs-Zielgröße eine Dauer oder Menge mindestens einer Voreinspritzung, eine Dauer oder Menge mindestens einer Nacheinspritzung, einen Raildruck, einen Injektorinnendruckverlauf, einen Zeitabstand zwischen einem Beginn jeweils benachbarter Teileinspritzungen, einen relativen Einspritzverlauf und/oder einen relativen Ansteuerverlauf einer Injektornadel eines Einspritzsystems bezogen auf den dem relativen Soll-Energieumsetzungsverlauf zumindest zu dem vorbestimmten Grad entsprechenden relativen Energieumsetzungsverlauf enthalten. Vorzugsweise enthält die Energieeinbringungs-Zielgröße nicht den Ansteuerbeginn und die Einspritzmenge einer Haupteinspritzung, da diese insbesondere entkoppelt bestimmt werden können. Beispielsweise umfasst die Energieeinbringungs-Zielgröße den relativen Einspritzverlauf und den Raildruck, die dem, dem relativen Soll-Energieumsetzungsverlauf zumindest zu einem vorbestimmten Grad entsprechenden, relativen Energieumsetzungsverlauf zugrunde liegen.

Der relative Soll-Energieumsetzungsverlauf ist ein relativer Verlauf einer für eine gewünschte Verbrennung bzw. eine Soll-Verbrennung charakteristischen Größe. Der relative Soll-Energieumsetzungsverlauf basiert auf einem absoluten Soll-Energieumsetzungsverlauf, der mittels einer Transformationsvorschrift in den relativen Soll-Energieumsetzungsverlauf überführt ist. Die Transformationsvorschrift enthält eine Skalierung des absoluten Soll-Energieumsetzungsverlaufs beispielsweise auf 1 und/oder eine Verschiebung des absoluten Soll-Energieumsetzungsverlaufs beispielsweise um eine absolute Lage.

Beispielsweise kann der relative Soll-Energieumsetzungsverlauf ein relativer Soll-Brennverlauf, ein relativer Soll-Heizverlauf, ein relativer Soll-Druckverlauf, ein relativer Soll-Differenzdruckverlauf oder ein relativer Soll-Temperaturverlauf in einem Brennraum der Verbrennungskraftmaschine oder ein relativer Verlauf einer anderen für die Soll-Verbrennung charakteristischen Größe sein. Der relative Soll-Energieumsetzungsverlauf kann anwendungsspezifisch gewählt sein, beispielsweise so, dass eine reduzierte Geräuschentwicklung oder eine erhöhte Verbrennungstemperatur erwartbar ist.

Der relative Energieumsetzungsverlauf, der dem relativen Soll-Energieumsetzungsverlauf zumindest zu dem vorbestimmten Grad entspricht und nachfolgend auch als zu ermittelnder relativer Energieumsetzungsverlauf bezeichnet wird, ist beispielsweise ein relativer Verlauf einer Größe, die für eine Verbrennung, die der gewünschten Verbrennung ähnlich ist oder dieser im Wesentlichen entspricht, charakteristisch ist. Der zu ermittelnde relative Energieumsetzungsverlauf basiert vorzugsweise auf einem absoluten Energieumsetzungsverlauf, der mittels einer Transformationsvorschrift, wie sie oben beschrieben wurde, in den zu ermittelnden relativen Energieumsetzungsverlauf überführt ist. Beispielsweise kann der zu ermittelnde relative Energieumsetzungsverlauf ein relativer Brennverlauf, ein relativer Heizverlauf, ein relativer Druckverlauf, ein relativer Differenzdruckverlauf oder ein relativer Temperaturverlauf in einem Brennraum der Verbrennungskraftmaschine oder ein relativer Verlauf einer anderen für eine Verbrennung charakteristischen Größe sein. Der zu ermittelnde relative Energieumsetzungsverlauf kann dem relativen Soll-Energieumsetzungsverlauf auch besser als zu dem vorgegebenen Grad entsprechen. Der zu ermittelnde relative Energieumsetzungsverlauf kann zu einem Mindestmaß mit dem relativen Soll-Energieumsetzungsverlauf übereinstimmen.

Der vorgegebene Grad, zu dem der zu ermittelnde relative Energieumsetzungsverlauf dem relativen Soll-Energieumsetzungsverlauf entsprechen soll, kann anwendungsspezifisch gewählt sein. Soll ein zu ermittelnder relativer Energieumsetzungsverlauf nur grob mit dem relativen Soll-Energieumsetzungsverlauf übereinstimmen, kann der vorgegebene Grad so gewählt sein, dass ein relativer Energieumsetzungsverlauf, der nicht vernachlässigbare Abweichungen vom relativen Soll-Energieumsetzungsverlauf aufweist, dem relativen Soll-Energieumsetzungsverlauf zumindest zu dem vorgegebenen Grad entspricht. Soll der einzustellende relative Energieumsetzungsverlauf hingegen gut mit dem relativen Soll-Energieumsetzungsverlauf übereinstimmen, kann der vorgegebene Grad so gewählt sein, dass ein relativer Energieumsetzungsverlauf, der lediglich geringfügige Abweichungen vom relativen Soll-Energieumsetzungsverlauf aufweist, dem relativen Soll-Energieumsetzungsverlauf zumindest zu dem vorgegebenen Grad entspricht. Unter geringfügigen Abweichungen sind hier vernachlässigbare Abweichungen zu verstehen, die kleiner als die nicht vernachlässigbaren Abweichungen sind. Der vorgegebene Grad kann beispielsweise als Güte angegeben sein.

Die Ist-Energieeinbringungsgröße enthält vorzugsweise einen oder mehrere diskrete Parameter zur Ansteuerung eines Einspritzsystems, einen Raildruck und/oder zur Ansteuerung des Einspritzsystems verwendbare zeitliche Verläufe, die einen relativen Verlauf einer für eine Ist-Verbrennung charakteristischen Größe beeinflussen. Beispielsweise kann die Ist-Energieeinbringungsgröße eine Dauer oder Menge mindestens einer Voreinspritzung, eine Dauer oder Menge mindestens einer Nacheinspritzung, einen Raildruck, einen Injektorinnendruckverlauf, einen Zeitabstand zwischen einem Beginn jeweils benachbarter Teileinspritzungen, einen relativen Einspritzverlauf und/oder einen relativen Ansteuerverlauf einer Injektornadel eines Einspritzsystems bezogen auf den relativen Ist-Energieumsetzungsverlauf enthalten. Beispielsweise umfasst die Ist-Energieeinbringungsgröße den relativen Einspritzverlauf und den Raildruck, die dem relativen Ist-Energieumsetzungsverlauf zugrunde liegen.

Der relative Ist-Energieumsetzungsverlauf ist ein relativer Verlauf einer für eine Ist-Verbrennung charakteristischen Größe. Der relative Ist-Energieumsetzungsverlauf basiert auf einem gemessenen Ist-Energieumsetzungsverlauf, der mittels einer Transformationsvorschrift, wie sie oben beschrieben wurde, in den relativen Ist-Energieumsetzungsverlauf überführt ist. Beispielsweise kann der relative Ist-Energieumsetzungsverlauf ein relativer Ist-Brennverlauf, ein relativer Ist-Heizverlauf, ein relativer Ist-Druckverlauf, ein relativer Ist-Differenzdruckverlauf oder ein relativer Ist-Temperaturverlauf in einem Brennraum der Verbrennungskraftmaschine oder ein relativer Verlauf einer anderen für die Ist-Verbrennung charakteristischen Größe sein.

Die relativen Energieumsetzungsverläufe wie der relativer Soll-Energieumsetzungsverlauf, der zu ermittelnde relative Energieumsetzungsverlauf und der relative Ist-Energieumsetzungsverlauf basieren auf zugehörigen absoluten Energieumsetzungsverläufen, die auf einen vorbestimmten Wert skaliert sind und deren Lage so verschoben ist, dass eine vorgegebene prozentuale Energieumsetzung an einer vorgegebenen Winkelposition liegt. Beispielsweise sind die relativen Energieumsetzungsverläufe auf 1 skaliert und so verschoben, dass ein Punkt des Energieumsetzungsverlaufs, bei dem die Hälfte der Energie umgesetzt ist, bei einer Winkelposition von 0° liegt.

Das Erhalten des relativen Soll-Energieumsetzungsverlaufs kann das Empfangen des relativen Soll-Energieumsetzungsverlaufs umfassen. Alternativ kann das Erhalten des relativen Soll-Energieumsetzungsverlaufs das Empfangen eines absoluten Soll-Energieumsetzungsverlaufs und das Ermitteln des relativen Soll-Energieumsetzungsverlaufs aus dem absoluten Soll-Energieumsetzungsverlauf, beispielsweise durch Überführen des absoluten Soll-Energieumsetzungsverlaufs mittels einer Transformationsvorschrift in den relativen Soll-Energieumsetzungsverlauf, umfassen.

Das Bereitstellen der Ist-Energieeinbringungsgröße kann das Abrufen der Ist-Energieeinbringungsgröße aus einer Speichereinrichtung umfassen. Alternativ kann das Bereitstellen der Ist-Energieeinbringungsgröße das Auswählen der Ist-Energieeinbringungsgröße aus mehreren Ist-Energieeinbringungsgrößen, die beispielsweise in einer Versuchstabelle in einer Speichereinrichtung hinterlegt sind, und/oder das Messen der Ist-Energieeinbringungsgröße enthalten. Die Versuchstabelle kann beispielsweise mit Zufallszahlen oder einem auf einer DoE-Methodik (Design-of-Experiments-Methodik) basierenden Messplan, beispielsweise einem Space-Filling-Design, gefüllt sein. Wahlweise kann das Bereitstellen der Ist-Energieeinbringungsgröße auch das Ermitteln der Ist-Energieeinbringungsgröße umfassen, beispielsweise mittels eines Optimieralgorithmus oder einer iterativ lernenden Regelung.

Das Erhalten des relativen Ist-Energieumsetzungsverlaufs kann das Empfangen eines relativen Ist-Energieumsetzungsverlaufs umfassen. Alternativ kann das Erhalten des relativen Ist-Energieumsetzungsverlauf das Messen und/oder das Empfangen eines absoluten Ist-Energieumsetzungsverlaufs und das Bestimmen des relativen Ist-Energieumsetzungsverlaufs aus dem absoluten Ist-Energieumsetzungsverlauf, beispielsweise durch Überführen des absoluten Ist-Energieumsetzungsverlaufs in den relativen Ist-Energieumsetzungsverlauf mittels einer Transformationsvorschrift, umfassen.

Der relative Soll-Energieumsetzungsverlauf, der zu ermittelnde relative Energieumsetzungsverlauf und der relative Ist-Energieumsetzungsverlauf können aneinander angepasst sein. Zum Beispiel können der relative Soll-Energieumsetzungsverlauf, der zu ermittelnde relative Energieumsetzungsverlauf und der relative Ist-Energieumsetzungsverlauf normiert und so verschoben sein, dass ein vorgegebener Punkt in den Energieumsetzungsverläufen, an dem ein bestimmter Prozentsatz der Energie umgesetzt ist, an einer vorgegebenen Winkelposition, beispielsweise bei 0°, liegt. Alternativ können der relative Soll-Energieumsetzungsverlauf, der zu ermittelnde relative Energieumsetzungsverlauf und/oder der relative Ist-Energieumsetzungsverlauf durch Umrechnung mittels geeigneter mathematischer Funktionen, wie zum Beispiel die Multiplikation mit je einem geeigneten Faktor, aneinander angepasst werden und, wie mit Bezug auf die Normierung beschrieben, verschoben sein.

Für das Bestimmen der Energieeinbringungs-Zielgröße bestehen verschiedene Möglichkeiten, die nachfolgend erläutert werden.

In den Ausführungsbeispielen umfasst das Verfahren zum Ermitteln der Energieeinbringungs-Zielgröße das Bewerten des relativen Ist-Energieumsetzungsverlaufs im Vergleich zu dem relativen Soll-Energieumsetzungsverlauf. In diesen Ausführungsbeispielen wird beim Bestimmen der Energieeinbringungs-Zielgröße die Ist-Energieeinbringungsgröße als Energieeinbringungs-Zielgröße ermittelt, wenn beim Bewerten des relativen Ist-Energieumsetzungsverlaufs festgestellt wird, dass der relative Ist-Energieumsetzungsverlauf eine vorgegebene Eigenschaft aufweist.

In manchen Ausführungsbeispielen kann beim Bewerten des relativen Ist-Energieumsetzungsverlaufs eine Güte des relativen Ist-Energieumsetzungsverlaufs im Vergleich zu dem relativen Soll-Energieumsetzungsverlauf bestimmt und eine Gütebewertung durchgeführt werden. Beim Bestimmen der Energieeinbringungs-Zielgröße kann dann die Ist-Energieeinbringungsgröße als Energieeinbringungs-Zielgröße ermittelt werden, wenn beim Bewerten des relativen Ist-Energieumsetzungsverlaufs festgestellt wird, dass die Güte einer vorgegebenen Güte entspricht oder besser als die vorgegebene Güte ist.

Zum Bewerten der Güte kann beispielsweise der relative Ist-Energieumsetzungsverlauf mit dem relativen Soll-Energieumsetzungsverlauf oder ein Integral des relativen Ist-Energieumsetzungsverlaufs mit einem Integral des relativen Soll-Energieumsetzungsverlauf verglichen werden und ein Vergleichsergebnis, zum Beispiel ein Fehlerverlauf, gebildet werden. Auf Grundlage des Vergleichsergebnisses kann dann mittels einer Art der Gütebestimmung, wie einem Root Mean Square Error (RMSE), einem Mean Absolute Error (MAE) oder einem Mean Square Error (MSE), die Güte bestimmt werden. Alternativ kann als Art der Gütebestimmung das Bestimmtheitsmaß (R²) oder ein Korrelationskoeffizient ermittelt werden. Die Art der Gütebestimmung kann weiterhin auch eine Fensterung der verwendeten Verläufe, d.h. eine Bestimmung der Güte in einem bestimmten Winkelintervall der Verläufe beinhalten.

Die Bewertung der Güte kann beispielsweise direkt durch eine Art der Gütebestimmung oder eine geeignete gewichtete Verknüpfung mehrerer Arten der Gütebestimmung oder eine multikriterielle Bewertung mehrerer Arten der Gütebestimmung erfolgen. Die Wahl der Gütebewertung kann anwendungsspezifisch sein. Abhängig davon, wozu die mit dem erfindungsgemäßen Verfahren ermittelte Energieeinbringungs-Zielgröße verwendet werden soll, können die Art der Gütebewertung und/oder die der Gütebewertung zugrundeliegenden Parameter gewählt sein.

Alternativ oder zusätzlich kann beim Bewerten des relativen Ist-Energieumsetzungsverlaufs eine Abweichung des relativen Ist-Energieumsetzungsverlaufs von dem Soll-Energieumsetzungsverlauf bestimmt werden und der relative Ist-Energieumsetzungsverlauf in Abhängigkeit der Abweichung bewertet werden.

In manchen Ausführungsbeispielen umfasst das Verfahren zum Ermitteln der Energieeinbringungs-Zielgröße neben dem Bewerten des relativen Ist-Energieumsetzungsverlaufs das Bereitstellen einer weiteren Ist-Energieeinbringungsgröße, wenn beim Bewerten des relativen Ist-Energieumsetzungsverlaufs festgestellt wird, dass der relative Ist-Energieumsetzungsverlauf die vorgegebene Eigenschaft nicht aufweist, das Erhalten eines weiteren relativen Ist-Energieumsetzungsverlaufs der Verbrennungskraftmaschine, dem die bereitgestellte weitere Ist-Energieeinbringungsgröße zugrunde liegt, und das Bewerten des weiteren relativen Ist-Energieumsetzungsverlaufs im Vergleich zu dem relativen Soll-Energieumsetzungsverlauf. In diesen Ausführungsbeispielen wird beim Bestimmen der Energieeinbringungs-Zielgröße dann die weitere Ist-Energieeinbringungsgröße als Energieeinbringungs-Zielgröße ermittelt, wenn beim Bewerten des weiteren relativen Ist-Energieumsetzungsverlaufs festgestellt wird, dass der weitere relative Ist-Energieumsetzungsverlauf eine vorgegebene Eigenschaft aufweist.

Zum Bereitstellen der weiteren Ist-Energieeinbringungsgröße kann eine Versuchstabelle oder eine mittels eines geeigneten Algorithmus', zum Beispiel eines Optimierers, erzeugte Tabelle zur Verfügung gestellt werden, aus der die weitere Ist-Energieeinbringungsgröße ausgewählt wird. Alternativ kann die weitere Ist-Energieeinbringungsgröße mittels eines geeigneten Algorithmus', zum Beispiel eines Optimierers oder einer iterativ lernenden Regelung, bereitgestellt werden. Als Optimierungsverfahren des Optimierers können beliebige lokale oder vorzugsweise globale, einkriterielle oder multikriterielle Optimierungsverfahren angewendet werden, wie beispielsweise ein Simplex-Verfahren, ein Gradientenverfahren, eine Partikel-Schwarm-Optimierung oder eine evolutionäre Optimierungsstrategie, wie zum Beispiel ein Strength Pareto Evolutionary Algorithmus (SPEA).

Beim Erhalten des weiteren relativen Ist-Energieumsetzungsverlaufs, dem die weitere Ist-Energieeinbringungsgröße zugrunde liegt, kann der weitere relative Ist-Energieumsetzungsverlauf beispielsweise empfangen werden oder es kann ein weiterer absoluter Ist-Energieumsetzungsverlauf gemessen und/oder empfangen werden und der weitere relative Ist-Energieumsetzungsverlauf aus dem weiteren absoluten Ist-Energieumsetzungsverlauf, beispielsweise mittels einer Transformationsvorschrift, bestimmt werden.

Beim Bewerten des relativen Ist-Energieumsetzungsverlaufs kann eine Güte des relativen Ist-Energieumsetzungsverlaufs im Vergleich zu dem relativen Soll-Energieumsetzungsverlauf bestimmt und eine Gütebewertung durchgeführt werden. Die Gütebewertung kann wie oben ausgeführt erfolgen. Alternativ kann beim Bewerten des relativen Ist-Energieumsetzungsverlaufs eine Abweichung des relativen Ist-Energieumsetzungsverlaufs von dem Soll-Energieumsetzungsverlauf bestimmt werden und der relative Ist-Energieumsetzungsverlauf in Abhängigkeit der Abweichung bewertet werden.

Nachdem der erhaltene Ist-Energieumsetzungsverlauf im Vergleich zu dem Soll-Energieumsetzungsverlauf bewertet ist, kann die weitere Ist-Energieeinbringungsgröße als Energieeinbringungs-Zielgröße ermittelt werden, wenn beim Bewerten des weiteren relativen Ist-Energieumsetzungsverlaufs festgestellt wird, dass der weitere relative Ist-Energieumsetzungsverlauf eine vorgegebene Eigenschaft aufweist. Weist der weitere Ist-Energieumsetzungsverlauf die vorgegebene Eigenschaft hingegen nicht auf, kann das Bereitstellen einer weiteren Ist-Energieeinbringungsgröße, das Erhalten eines weiteren relativen Ist-Energieumsetzungsverlaufs der Verbrennungskraftmaschine, dem die bereitgestellte weitere Ist-Energieeinbringungsgröße zugrunde liegt, und das Bewerten des weiteren relativen Ist-Energieumsetzungsverlaufs im Vergleich zu dem relativen Soll-Energieumsetzungsverlauf wiederholt werden, bis ein Abbruchkriterium erfüllt ist. Das Abbruchkriterium kann eine Feststellung sein, dass der erhaltene weitere relative Ist-Energieumsetzungsverlauf dem relativen Soll-Energieumsetzungsverlauf zumindest zu dem vorbestimmten Grad oder gegebenenfalls besser entspricht. Alternativ kann das Abbruchkriterium eine Feststellung sein, dass eine maximale Anzahl an Wiederholungen durchgeführt ist, eine vorgegebene Zeit vergangen ist oder alle Einträge einer Versuchstabelle vollständig ausgewertet sind. Ein weiteres Abbruchkriterium kann das Verlassen eines Betriebsbereichs sein. Abschließend kann die dem relativen Ist-Energieumsetzungsverlauf, der dem relativen Soll-Energieumsetzungsverlauf zumindest zu dem vorbestimmten Grad entspricht, zugrunde liegende Ist-Energieeinbringungsgröße als Energieeinbringungs-Zielgröße bestimmt werden.

Durch das wiederholte Bereitstellen einer weiteren Ist-Energieeinbringungsgröße, das wiederholte Erhalten eines weiteren relativen Ist-Energieumsetzungsverlaufs der Verbrennungskraftmaschine und das wiederholte Bewerten des weiteren relativen Ist-Energieumsetzungsverlaufs können Abweichungen zwischen einem zu ermittelnden relativen Energieumsetzungsverlauf und dem relativen Soll-Energieumsetzungsverlauf effektiv reduziert werden. Damit lässt sich die Energieeinbringungs-Zielgröße mit dem beschriebenen erfindungsgemäßen Verfahren schnell ermitteln.

Das Bereitstellen der Ist-Energieeinbringungsgröße und das Bereitstellen der weiteren Ist-Energieeinbringungsgröße kann auf unterschiedlichen Vorgängen beruhen. Beispielsweise kann eine erste Ist-Energieeinbringungsgröße mit Hilfe einer Versuchstabelle bereitgestellt werden und eine weitere Ist-Energieeinbringungsgröße mit Hilfe der iterativ lernenden Regelung bereitgestellt werden.

In manchen Ausführungsbeispielen werden beim Bereitstellen der Ist-Energieeinbringungsgröße mehrere Ist-Energieeinbringungsgrößen bereitgestellt. Beim Erhalten des relativen Ist-Energieumsetzungsverlaufs der Verbrennungskraftmaschine wird zu jeder bereitgestellten Ist-Energieeinbringungsgröße ein relativer Ist-Energieumsetzungsverlauf erhalten. Beim Bewerten des relativen Ist-Energieumsetzungsverlaufs wird jeder relative Ist-Energieumsetzungsverlauf im Vergleich zu dem relativen Soll-Energieumsetzungsverlauf bewertet. Beim Bestimmen der Energieeinbringungs-Zielgröße wird ein relativer Ist-Energieumsetzungsverlauf der relativen Ist-Energieumsetzungsverläufe ausgewählt, der die vorgegebene Eigenschaft aufweist, und die dem ausgewählten relativen Ist-Energieumsetzungsverlauf zugrunde liegende Ist-Energieeinbringungsgröße als Energieeinbringungs-Zielgröße ermittelt.

Beispielsweise können die mehreren Ist-Energieeinbringungsgrößen aus einer Versuchstabelle oder einer mittels eines Optimierers erzeugten Tabelle ausgewählt werden und zu jeder der mehreren Ist-Energieeinbringungsgrößen kann je einer der mehreren relativen Ist-Energieumsetzungsverläufe erhalten werden. Das Erhalten jedes der mehreren relativen Ist-Energieumsetzungsverläufe kann wie oben beschrieben erfolgen. Für jeden der mehreren relativen Ist-Energieumsetzungsverläufe kann wie oben beschrieben eine Bewertung im Vergleich zu dem Soll-Energieumsetzungsverlauf durchgeführt werden, beispielsweise eine Güte bestimmt und eine Gütebewertung durchgeführt werden. Anschließend kann zum Bestimmen der Energieeinbringungszielgröße aus den mehreren relativen Ist-Energieumsetzungsverläufen ein relativer Ist-Energieumsetzungsverlauf ausgewählt werden, der eine vorgegebene Güte oder eine Güte, die besser als die vorgegebene Güte ist, aufweist. Die dem ausgewählten relativen Ist-Energieumsetzungsverlauf zugrunde liegende Ist-Energieeinbringungsgröße kann dann als Energieeinbringungs-Zielgröße ausgewählt werden. Je nach Anwendungsfall können auch mehrere relative Ist-Energieumsetzungsverläufe ausgewählt werden, deren Güten verglichen mit den Güten der übrigen relativen Ist-Energieumsetzungsverläufe besser sind oder zumindest eine vorgegebene Güte aufweisen, und jede einem ausgewählten relativen Ist-Energieumsetzungsverlauf zugrunde liegende Ist-Energieeinbringungsgröße als potentielle Energieeinbringungs-Zielgröße ausgewählt werden. Die beschriebene Bestimmung der Energieeinbringungs-Zielgröße ist einfach und ohne großen Rechenaufwand durchführbar. Die bestimmte Energieeinbringungs-Zielgröße kann diversen Anwendungen zugrunde liegen, beispielsweise einer automatisierten Bedatung eines Steuergeräts einer Verbrennungskraftmaschine oder einer Steuerung der Verbrennungskraftmaschine im Betrieb, beispielsweise einer Zylindergleichstellung, einer Prozessoptimierung im Betrieb, einer Brennverfahrensuntersuchung oder einer Kraftstoffuntersuchung.

In den Ausführungsbeispielen wird zum Bewerten des relativen ist-Energieumsetzungsverlaufs der relative Ist-Energieumsetzungsverlauf mit dem relativen Soll-Energieumsetzungsverlauf verglichen. Zum Bereitstellen der Ist-Energieeinbringungsgröße wird ein Vergleichsergebnis des Vergleichens des relativen Ist-Energieumsetzungsverlaufs mit dem relativen Soll-Energieumsetzungsverlauf gebildet.

Das Vergleichsergebnis kann beispielsweise ein Fehlerverlauf sein, der durch Subtraktion des relativen Ist-Energieumsetzungsverlaufs von dem relativen Soll-Energieumsetzungsverlauf gebildet wird.

Außerdem wird in diesen Ausführungsbeispielen zum Bereitstellen der Ist-Energieeinbringungsgröße ein Zündverzugsverlauf erhalten. Der Zündverzugsverlauf beschreibt einen zeitlichen Verzug zwischen einer Energieeinbringung, beispielsweise einer Einspritzung, und einer Energieumsetzung, beispielsweise einer Verbrennung. Der Zündverzugsverlauf kann auf Grundlage des relativen Ist-Energieumsetzungsverlaufs und eines relativen Ist-Energieeinbringungsverlaufs, der dem relativen Ist-Energieumsetzungsverlauf zugrunde liegt, bestimmt werden. Alternativ kann der Zündverzugsverlauf mit Hilfe eines Modells oder auf andere Weise bestimmt sein.

Zum Bereitstellen der Ist-Energieeinbringungsgröße kann anschließend das Vergleichsergebnis, beispielsweise der Fehlerverlauf, anhand des erhaltenen Zündverzugsverlaufs manipuliert werden. Dazu kann der Fehlerverlauf in Abhängigkeit des Zündverzugsverlaufs punktweise verschoben werden. Beispielsweise wird jeder Punkt des Fehlerverlaufs um den zugehörigen Zündverzug verschoben.

Auf Grundlage des manipulierten Vergleichsergebnisses, beispielsweise des manipulierten Fehlerverlaufs, kann dann eine iterativ lernende Regelung durchgeführt werden und die Ist-Energieeinbringungsgröße mit Hilfe einer Bildungsvorschrift auf Grundlage eines Ergebnisses der iterativ lernenden Regelung gebildet werden. Die Bildungsvorschrift beschreibt dabei eine Umwandlung eines relativen Energieeinbringungsverlaufs in eine zur Ansteuerung der Verbrennungskraftmaschine geeignete Form, wie zum Beispiel in diskrete Einspritzparameter und einen Raildruck und/oder in direkt zur Ansteuerung geeignete Verläufe.

Durch die Nutzung des Zündverzugsverlaufs zum Manipulieren des Vergleichsergebnisses können Abweichungen des relativen Ist-Energieumsetzungsverlaufs vom relativen Soll-Energieumsetzungsverlauf als eine Abweichung des relativen Energieeinbringungsverlaufs ausgedrückt werden und einem Verlauf der Ist-Energieeinbringungsgröße zugeordnet werden. Somit können die Abweichungen effizient reduziert werden.

In manchen Ausführungsbeispielen kann zum Bereitstellen der Ist-Energieeinbringungsgröße ein Modell zum Bestimmen einer Ist-Energieeinbringungsgröße bereitgestellt werden und die Ist-Energieeinbringungsgröße mittels des bereitgestellten Modells ermittelt werden. Gegebenenfalls kann mit Hilfe des Modells eine Mehrzahl an Ist-Energieeinbringungsgrößen erzeugt werden, die anschließend beispielsweise in einer Versuchstabelle aufgelistet werden.

Das Modell kann dazu ausgelegt sein, ausgehend von dem relativen Soll-Energieumsetzungsverlauf eine oder mehrere Ist-Energieeinbringungsgrößen zur Verfügung zu stellen. Als Modell kann beispielsweise ein Zündverzugsverlauf dienen.

Alternativ kann das Modell dazu ausgelegt sein, ausgehend von mehreren denkbaren Energieeinbringungsgrößen mittels des Modells zu jeder denkbaren relativen oder absoluten Ist-Energieeinbringungsgröße einen relativen oder absoluten Energieumsetzungsverlauf zu erzeugen und diese relativen oder absoluten Energieumsetzungsverläufe jeweils mit dem relativen oder absoluten Soll-Energieumsetzungsverlauf zu vergleichen. Anhand der Vergleichsergebnisse können eine oder mehrere denkbare Energieeinbringungsgrößen als Ist-Energieeinbringungsgröße bereitgestellt werden.

In manchen Ausführungsbeispielen kann auf Grundlage des relativen Soll-Energieumsetzungsverlaufs und des relativen Ist-Energieumsetzungsverlaufs eine erste Energieeinbringungs-Zielgröße bestimmt werden, die zum Formen eines dem relativen Soll-Energieumsetzungsverlauf zumindest zu einem ersten vorbestimmten Grad entsprechenden relativen Energieumsetzungsverlaufs einer Verbrennungskraftmaschine ausgelegt ist. Anschließend kann auf Grundlage des relativen Soll-Energieumsetzungsverlaufs und der ersten Energieeinbringungszielgröße eine zweite Energieeinbringungs-Zielgröße bestimmt werden, die zum Formen eines dem relativen Soll-Energieumsetzungsverlauf zumindest zu einem zweiten vorbestimmten Grad entsprechenden relativen Energieumsetzungsverlaufs einer Verbrennungskraftmaschine ausgelegt ist, wobei der erste vorbestimmte Grad grober ist als der zweite vorbestimmte Grad, beispielsweise eine schlechtere vorgegebene Güte verlangt. Die erste Energieeinbringungs-Zielgröße und die zweite Energieeinbringungs-Zielgröße enthalten insbesondere einen oder mehrere Parameter, die einen relativen Verlauf einer Größe, die für eine einer gewünschten Verbrennung bzw. einer Soll-Verbrennung in bestimmter Weise übereinstimmende Verbrennung charakteristisch ist, beeinflussen. Die erste Energieeinbringungs-Zielgröße kann sich von der zweiten Energieeinbringungs-Zielgröße beispielsweise darin unterscheiden, dass die durch sie beeinflusste Verbrennung weniger Ähnlichkeit mit der gewünschten Verbrennung aufweist als die durch die zweite Energieeinbringungs-Zielgröße beeinflusste Verbrennung.

Das Bestimmen der ersten Energieeinbringungs-Zielgröße und der zweiten Energieeinbringungs-Zielgröße kann wie oben im Detail beschrieben erfolgen. Zum Beispiel kann zunächst eine Grobabstimmung erfolgen, indem mit Hilfe von Ist-Energieeinbringungsgrößen, die über eine Versuchstabelle bereitgestellt sind, eine erste Energieeinbringungs-Zielgröße bestimmt wird. Anschließend kann ausgehend von der Grobabstimmung eine Feinabstimmung erfolgen, indem ausgehend von der ersten Energieeinbringungs-Zielgröße mit Hilfe der iterativ lernenden Regelung oder mit Hilfe des Optimierungsalgorithmus die zweite Energieeinbringungs-Zielgröße bestimmt wird. Die Grobabstimmung kann alternativ auch mittels der iterativ lernenden Regelung, des Optimierungsalgorithmus und/oder eines Modells erfolgen. Die Feinabstimmung kann alternativ auch mittels einer Versuchstabelle und/oder eines Modells erfolgen, wobei die Versuchstabelle bei der Feinabstimmung gezielt an die erste Energieeinbringungs-Zielgröße angepasst ist.

Gegebenenfalls kann eine weitere Energieeinbringungs-Zielgröße bestimmt werden, um eine Zwischenabstimmung zwischen der Grobabstimmung und der Feinabstimmung durchzuführen. Das Verfahren zum Ermitteln einer Energieeinbringungs-Zielgröße kann an einem Prüfstand oder in einer Verbrennungskraftmaschine eines fertigen Fahrzeugs, Schiffs und/oder Generators Anwendung finden. Je nach Anwendung kann das Verfahren unterschiedlichen Zwecken dienen.

Am Prüfstand kann das Verfahren zum Beispiel dazu genutzt werden, nach einem Wechsel des Einspritzsystems einen gewünschten Brennverlauf einstellen zu können oder für eine neu entwickelte Verbrennungskraftmaschine geeignete Parameter zum Einstellen des gewünschten Brennverlaufs zu finden. Dadurch wird die Entwicklungszeit bei der Applikation von neuen Motorprojekten deutlich verkürzt und die Entwicklungskosten werden erheblich verringert.

In der Verbrennungskraftmaschine eines fertigen Fahrzeugs, Schiffs oder Generators kann das Verfahren zum Ermitteln einer Energieeinbringungs-Zielgröße beispielsweise zyklisch nach einer bestimmten Betriebszeit oder Fahrstrecke oder nach bestimmten diskreten Ereignissen, beispielsweise nach jedem Tanken und/oder nach jedem Werkstattbesuch, durchgeführt werden, um auf Veränderungen der Verbrennungskraftmaschine, beispielsweise eine Verkokung oder Alterung der Injektoren oder Änderungen im Abgasrückführsystem reagieren zu können. Alternativ kann auch auf Störungen wie Änderungen der Kraftstoffqualität reagiert werden. Selbstverständlich sind für den Fachmann noch eine Reihe weiterer Anwendungen denkbar.

Die vorliegende Erfindung betrifft weiterhin ein Verfahren zum Bestimmen einer absoluten Energieeinbringungsgröße zum Betreiben einer Verbrennungskraftmaschine, wobei die Energieeinbringungsgröße einen Einspritzverlauf oder einen Ansteuerverlauf des Injektors und/oder den Raildruck bzw. einen Druck im Injektor enthalten kann. Dabei wird ein erster Teilverlaufsabschnitt eines Energieeinbringungsverlaufs, über den die absolute Lage des Energieumsetzungsverlaufs einstellbar ist, ermittelt. Zum Beispiel kann als erster Teilverlaufsabschnitt ein Ansteuerbeginn einer Haupteinspritzung, der im Wesentlichen eine gewünschte absolute Lage der Verbrennung der Verbrennungskraftmaschine zur Folge hat, ermittelt werden. Weiterhin wird ein zweiter Teilverlaufsabschnitt des Energieeinbringungsverlaufs, über den die absolute umgesetzte Energie des Energieumsetzungsverlaufs einstellbar ist, ermittelt. Zum Beispiel kann als zweiter Teilverlaufsabschnitt eine Einspritzmenge der Haupteinspritzung, die im Wesentlichen eine absolute umgesetzte Energie der Verbrennungskraftmaschine zur Folge hat, ermittelt werden. Außerdem wird eine Energieeinbringungs-Zielgröße zum Formen eines einem relativen Soll-Energieumsetzungsverlauf zumindest zu einem vorbestimmten Grad entsprechenden relativen Energieumsetzungsverlaufs einer Verbrennungskraftmaschine bestimmt, wobei insbesondere wie oben ausführlich beschrieben verfahren wird. Auf Grundlage des ersten Teilverlaufsabschnitts und des zweiten Teilverlaufsabschnitts, beispielsweise des Ansteuerbeginns und der Einspritzmenge der Haupteinspritzung, und auf Grundlage der Energieeinbringungs-Zielgröße wird dann die absolute Energieeinbringungsgröße zum Betreiben der Verbrennungskraftmaschine ermittelt.

Die Ermittlung des ersten Teilverlaufsabschnitts und des zweiten Teilverlaufsabschnitts, beispielsweise des Ansteuerbeginns und der Einspritzmenge der Haupteinspritzung, sind von der Bestimmung der Energieeinbringungs-Zielgröße entkoppelt. Dadurch ist es möglich, den relativen Verlauf der Energieumsetzung während des Betriebs der Verbrennungskraftmaschine zu ändern, ohne dass dadurch dauerhafte Störungen der absoluten umgesetzten Energie bzw. der absolute Lage verursacht werden. Außerdem ist der Bestimmungsaufwand durch die entkoppelte Bestimmung der Energieeinbringungs-Zielgröße wesentlich verringert.

Die vorliegende Erfindung betrifft weiterhin eine Steuervorrichtung zum Ermitteln einer Energieeinbringungs-Zielgröße zum Formen eines einem relativen Soll-Energieumsetzungsverlauf zumindest zu einem vorbestimmten Grad entsprechenden relativen Energieumsetzungsverlaufs einer Verbrennungskraftmaschine, die dazu ausgebildet ist, das oben beschriebene Verfahren zum Ermitteln einer Energieeinbringungs-Zielgröße und gegebenenfalls das Verfahren zum Bestimmen einer absoluten Energieeinbringungsgröße zum Betreiben einer Verbrennungsraftmaschine durchzuführen. Die Steuervorrichtung kann Bestandteil einer Verbrennungskraftmaschine, beispielsweise eines Kraftfahrzeugs, eines Schiffs oder eines Generators, sein. Alternativ kann die Steuervorrichtung Teil eines Prüfstands zur Entwicklung einer solchen Verbrennungskraftmaschine sein.

Die Steuervorrichtung kann einen Prozessor, beispielsweise einen Mikroprozessor, aufweisen. Der Prozessor kann beispielsweise der Prozessor einer Motorsteuerung sein. Die Steuervorrichtung kann weiterhin eine Speichereinrichtung zum Speichern von relativen Soll-Energieeinbringungsverläufen, Versuchstabellen, Optimierungsalgorithmen, Regelungsvorschriften der iterativ Lernenden Regelung, Modellen zur Bestimmung der Energieeinbringungs-Zielgröße, Energieeinbringung-Zielgrößen und/oder weiteren Größen und Informationen aufweisen. Die Steuervorrichtung kann weiter Signaleingänge zum Empfangen von Ist-Energieeinbringungsgrößen, relativen oder absoluten Ist-Energieumsetzungsverläufen und/oder weiteren Parametern und Informationen umfassen. Weiter kann die Steuervorrichtung einen Signalausgang enthalten, um Energieeinbringungs-Zielgrößen oder aus diesen hergeleitete absolute Energieeinbringungsgrößen auszugeben.

Die vorliegende Erfindung betrifft weiterhin eine Verbrennungskraftmaschine mit einer Steuervorrichtung zum Ermitteln einer Energieeinbringungs-Zielgröße und gegebenenfalls zum Ermitteln einer absoluten Energieeinbringungsgröße, wie sie oben beschrieben ist. Die Verbrennungskraftmaschine kann eine Dieselbrennkraftmaschine, beispielsweise eine Dieselbrennkraftmaschine mit Direkteinspritzung und/oder Common-Rail-Einspritzsystem, oder ein Ottomotor sein.

Die Verbrennungskraftmaschine kann beispielsweise Mittel, insbesondere Sensoren, zum Messen von Ist-Energieumsetzungsverläufen besitzen. Die Sensoren sind vorzugsweise mit der Steuervorrichtung verbunden, beispielsweise über einen Datenbus.

Die vorliegende Erfindung betrifft weiterhin ein Kraftfahrzeug, ein Schiff und/oder einen Generator mit einer Verbrennungskraftmaschine, wie sie oben beschrieben wurde.

Ausführungsbeispiele der Erfindung werden nun beispielhaft und unter Bezugnahme auf die beigefügten Zeichnungen beschrieben. Darin zeigen:
- Fig. 1: eine schematische Darstellung einer erfindungsgemäßen Steuervorrichtung zum Ermitteln einer Energieeinbringungs-Zielgröße;
- Fig. 2: ein Flussdiagramm eines ersten Verfahrens zum Ermitteln einer Energieeinbringungs-Zielgröße;
- Fig. 3: eine schematische Darstellung eines normierten relativen Einspritzverlaufs, eines normierten relativen Ist-Brennverlaufs und eines normierten relativen Soll-Brennverlaufs;
- Fig. 4: ein Flussdiagramm eines ersten Verfahrens zum Bestimmen des relativen Ziel-Einspritzverlaufs und des Ziel-Raildrucks;
- Fig. 5: ein Flussdiagramm eines Verfahrens zur Gütebestimmung von Ist-Brennverläufen;
- Fig. 6: eine schematische Darstellung eines Fehlerverlaufs des normierten relativen Ist-Brennverlaufs zu dem normierten relativen Soll-Brennverlauf aus Fig. 3;
- Fig. 7: ein Flussdiagramm eines zweiten Verfahrens zum Bestimmen des relativen Ziel-Einspritzverlaufs und des Ziel-Raildrucks;
- Fig. 8: eine schematische Darstellung eines Zündverzugsverlaufs;
- Fig. 9: die schematische Darstellung des Fehlerverlaufs aus Fig. 6 und eine schematische Darstellung eines mittels des Zündverzugsverlaufs aus Fig. 8 manipulierten Fehlerverlaufs;
- Fig. 10: ein Flussdiagramm eines dritten Verfahrens zum Bestimmen des relativen Ziel-Einspritzverlaufs und des Ziel-Raildrucks;
- Fig. 11: ein Flussdiagramm eines zweiten Verfahrens zum Ermitteln einer Energieeinbringungs-Zielgröße; und
- Fig. 12: ein Flussdiagramm eines Verfahrens zum Ermitteln von absoluten Einspritzgrößen zum Betreiben einer Verbrennungskraftmaschine.

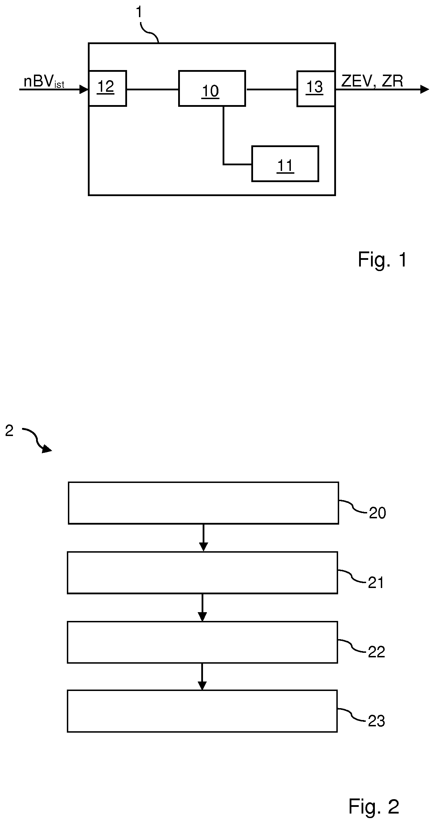

Ein Ausführungsbeispiel einer Steuervorrichtung 1 einer Verbrennungskraftmaschine zum Ermitteln einer Energieeinbringungs-Zielgröße zum Formen eines einem relativen Soll-Brennverlauf zumindest zu einem vorbestimmten Grad entsprechenden relativen Brennverlaufs ist in Fig. 1 gezeigt. Die Energieeinbringungs-Zielgröße ist in den nachfolgend beschriebenen Ausführungsbeispielen eine Kombination aus einem relativen Ziel-Einspritzverlauf ZEV und einem Ziel-Raildruck ZR. Die Energieeinbringungs-Zielgröße kann aber auch zusätzliche oder andere Parameter enthalten.

Die Steuervorrichtung 1 enthält einen Mikroprozessor 10, eine Speichereinrichtung 11, die mit dem Mikroprozessor 10 verbunden ist, und einen Signaleingang 12 und einen Signalausgang 13, die mit dem Prozessor 10 verbunden sind. Der Signaleingang 12 ist zum Empfangen eines normierten relativen Ist-Brennverlaufs nBVᵢₛₜ ausgebildet. Der Signalausgang 13 ist zum Ausgeben des relativen Ziel-Einspritzverlaufs ZEV und des Ziel-Raildrucks ZR ausgebildet.

Der Mikroprozessor 10 ist dazu ausgebildet, mit Hilfe eines Programms, das in der Speichereinrichtung 11 hinterlegt ist, ein Verfahren 2 oder 7 zum Ermitteln einer Energieeinbringungs-Zielgröße auszuführen. Die Energieeinbringungs-Zielgröße ist nachfolgend eine Kombination eines relativen Ziel-Einspritzverlaufs ZEV und eines Ziel-Raildrucks ZR und ist zum Formen eines einem relativen Soll-Brennverlauf zumindest zu einem vorbestimmten Grad entsprechenden relativen Ist-Brennverlaufs der Verbrennungskraftmaschine ausgelegt. Ein erstes Verfahren 2 zum Ermitteln der Energieeinbringungs-Zielgröße ist in Fig. 2 dargestellt.

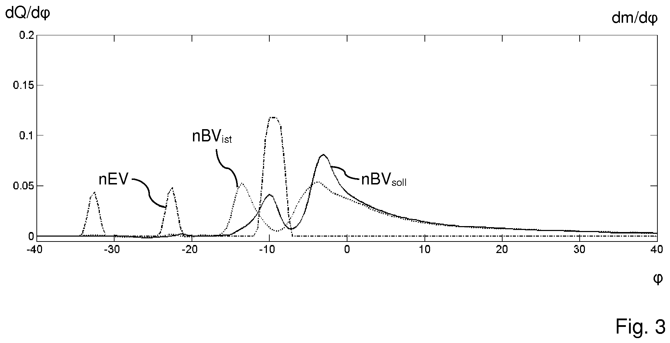

Bei 20 wird ein normierter relativer Soll-Brennverlauf nBVₛₒₗₗ empfangen, wie er beispielhaft in Fig. 3 gezeigt ist. Der normierte relative Soll-Brennverlauf nBVₛₒₗₗ ist in der Speichereinrichtung 11 der Steuervorrichtung 1 hinterlegt und wird von dieser abgerufen.

Bei 21 wird ein erster normierter relativer Einspritzverlauf nEV und ein erster Raildruck bereitgestellt. Der erste normierte relative Einspritzverlauf nEV und der erste Raildruck werden mittels einer Versuchstabelle, einer iterativ lernenden Regelung, eines Optimierungsalgorithmus oder eines Modells bereitgestellt. Der bereitgestellte erste normierte relative Einspritzverlauf nEV und der erste Raildruck können dazu verwendet werden, eine Verbrennungskraftmaschine anzusteuern. In Fig. 3 ist der erste normierte relative Einspritzverlauf nEV schematisch dargestellt.

Bei 22 wird ein erster normierter relativer Ist-Brennverlauf nBVᵢₛₜ erhalten, dem der erste normierte relative Einspritzverlauf nEV und der erste Raildruck zugrunde liegen. Dazu wird, während die Verbrennungskraftmaschine auf Grundlage des bereitgestellten ersten normierten relativen Einspritzverlaufs nEV und des ersten Raildrucks betrieben wird, aus einem gemessenen Zylinderdruck ein normierter relativer Ist-Brennverlauf nBVᵢₛₜ bestimmt und von der Steuervorrichtung empfangen. Der erste normierte relative Ist-Brennverlauf nBVᵢₛₜ ist in Fig. 3 beispielhaft dargestellt.

Bei 23 wird auf Grundlage des normierten relativen Soll-Brennverlaufs nBVₛₒₗₗ und des ersten normierten relativen Ist-Brennverlaufs nBVᵢₛₜ der normierte relative Ziel-Einspritzverlauf und der Ziel-Raildruck bestimmt, die, wenn sie einer Verbrennung der Verbrennungskraftmaschine zugrunde gelegt werden, zu einem normierten relativen Brennverlauf führen, der dem normierten relativen Soll-Brennverlauf nBVₛₒₗₗ zumindest zu einem vorbestimmten Grad entspricht.

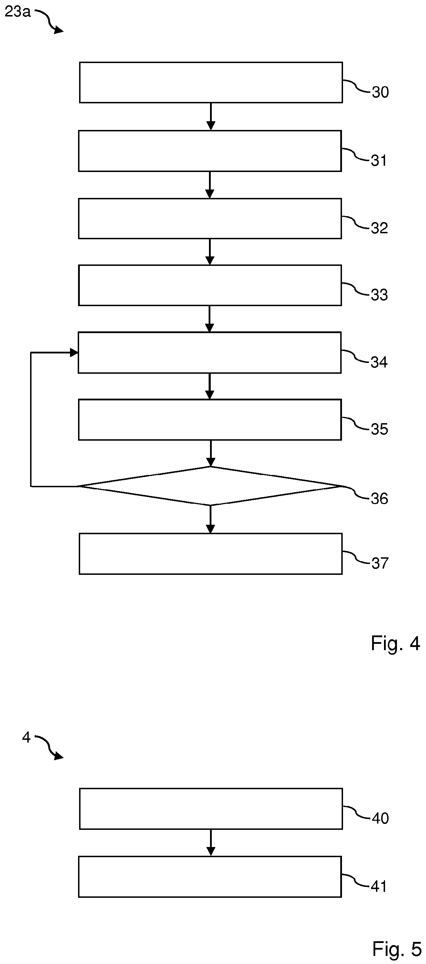

Mit Bezug auf Fig. 4 bis Fig. 10 werden nun unterschiedliche Verfahren 23a, 23b, 23c zum Bestimmen des relativen Ziel-Einspritzverlaufs ZEV und des Ziel-Raildrucks ZR zum Formen des dem normierten relativen Soll-Brennverlauf nBVₛₒₗₗ zumindest zu dem vorbestimmten Grad entsprechenden normierten relativen Ist-Brennverlaufs nBVᵢₛₜ beschrieben.

Fig. 4 zeigt ein Flussdiagramm eines ersten Verfahrens 23a zum Bestimmen des relativen Ziel-Einspritzverlaufs ZEV und des Ziel-Raildrucks ZR, wobei mit Hilfe einer Versuchstabelle, die verschiedene Kombinationen von Einspritzverläufen und Raildrücken enthält, normierte relative Ist-Brennverläufe nBVᵢₛₜ bestimmt werden und auf Grundlage einer Gütebewertung der normierten relativen Ist-Brennverläufe der relative Ziel-Einspritzverlauf ZEV und der Ziel-Raildruck ZR bestimmt werden. In der Versuchstabelle sind auch der dem ersten normierten relativen Ist-Einspritzverlauf nEV zugrundeliegende Einspritzverlauf und der erste Raildruck enthalten.

Bei 30 wird mittels einer Gütebestimmung eine Güte des ersten normierten relativen Ist-Brennverlaufs nBVᵢₛₜ bestimmt. Ein beispielhaftes Verfahren 4 zur Gütebestimmung wird weiter unten mit Bezug auf Fig. 5 beschrieben.

Bei 31 werden ein zweiter Einspritzverlauf und ein zweiter Raildruck bereitgestellt, indem sie aus der Versuchstabelle ausgewählt werden, und aus denen sich ein zweiter normierter relativer Einspritzverlauf und ein zweiter Raildruck ergeben. Der bereitgestellte zweite Einspritzverlauf und der zweite Raildruck werden dazu verwendet, die Verbrennungskraftmaschine anzusteuern.

Bei 32 wird ein zweiter normierter relativer Ist-Brennverlauf erhalten, dem der zweite normierte relative Einspritzverlauf und der zweite Raildruck zugrunde liegen. Der zweite normierte relative Ist-Brennverlauf wird analog zu dem ersten normierten relativen Ist-Brennverlauf in Schritt 22 des mit Bezug auf Fig. 2 beschriebenen Verfahrens 2 zum Ermitteln der Energieeinbringungs-Zielgröße erhalten.

Bei 33 wird mittels einer Gütebestimmung, wie sie weiter unten mit Bezug auf Fig. 5 beschrieben wird, eine Güte des zweiten normierten relativen Ist-Brennverlaufs bestimmt.

Bei 34 werden die Schritte 31 bis 33 für weitere in der Versuchstabelle hinterlegte Kombinationen aus Einspritzverläufen und Raildrücken ausgeführt. Damit liegen für mehrere Kombinationen aus Einspritzverläufen und Raildrücken einschließlich der Kombination aus dem dem ersten normierten relativen Ist-Brennverlauf zugrundeliegenden Einspritzverlauf und dem ersten Raildruck und der Kombination aus dem dem zweiten normierten relativen Ist-Brennverlauf zugrundeliegenden Einspritzverlauf und dem zweiten Raildruck jeweils ein normierter relativer Ist-Brennverlauf und jeweils eine Güte pro normiertem relativem Ist-Brennverlauf vor.

Aus den jeweiligen normierten relativen Ist-Brennverläufen wird bei 35 der normierte relative Ist-Brennverlauf ausgewählt, dessen Güte im Vergleich zu den Güten der übrigen normierten relativen Ist-Brennverläufe am besten ist.

Bei 36 wird ermittelt, ob die Güte des ausgewählten normierten relativen Ist-Brennverlaufs einer vorgegebenen Güte entspricht oder besser als diese ist. Wenn die Güte des ausgewählten normierten relativen Ist-Brennverlaufs schlechter als die vorgegebene Güte ist, wird eine weitere Versuchstabelle bereitgestellt. Für die in der weiteren Versuchstabelle hinterlegten Kombinationen aus Einspritzverläufen und Raildrücken werden die Schritte 34 und 35 ausgeführt.

Wenn die Güte des ausgewählten normierten relativen Ist-Brennverlaufs der vorgegebenen Güte entspricht oder besser als diese ist, wird bei 37 der dem ausgewählten normierten relativen Ist-Brennverlauf zugrunde liegende normierte relative Einspritzverlauf und gegebenenfalls die zugehörigen Parameter als relativer Ziel-Einspritzverlauf ausgewählt und der dem ausgewählten normierten relativen Ist-Brennverlauf zugrunde liegende Raildruck als Ziel-Raildruck ausgewählt.

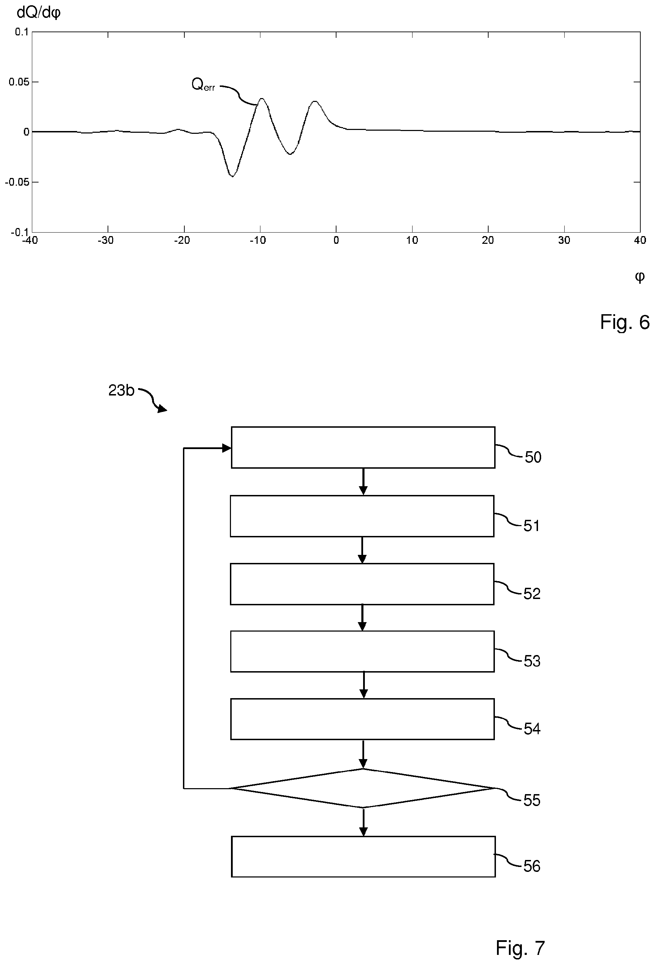

Fig. 5 zeigt ein Flussdiagramm eines Verfahrens 4 zur Gütebestimmung eines normierten relativen Ist-Brennverlaufs. Bei 40 wird ein Fehlerverlauf Qₑᵣᵣ gebildet. Dazu wird der normierte relative Ist-Brennverlauf nBVᵢₛₜ von dem normierten relativen Soll-Brennverlauf nBVₛₒₗₗ subtrahiert. Der normierte relative Ist-Brennverlauf nBVᵢₛₜ und der normierte relative Soll-Brennverlauf nBVₛₒₗₗ sind in Fig. 3 beispielhaft dargestellt. Fig. 6 zeigt beispielhaft einen Fehlerverlauf Qₑᵣᵣ des ersten normierten relativen Ist-Brennverlaufs nBVᵢₛₜ aus Fig. 3.

Bei 41 wird auf Grundlage des Fehlerverlaufs Qₑᵣᵣ eine Güte des normierten relativen Ist-Brennverlaufs nBVᵢₛₜ bestimmt. Dazu wird das RMSE-Verfahren eingesetzt.

Fig. 7 zeigt ein Flussdiagramm eines zweiten Verfahrens 23b zum Bestimmen des relativen Ziel-Einspritzverlaufs und des Ziel-Raildrucks, wobei mit Hilfe einer iterativ lernenden Regelung Zwischen-Einspritzverläufe bzw. Ziel-Einspritzverläufe und Zwischen-Raildrücke bzw. Ziel-Raildrücke bestimmt werden. Das Verfahren schließt wiederum an Schritt 22 des Verfahrens 2 zum Ermitteln der Energieeinbringungs-Zielgröße an und der erste normierte relative Ist-Einspritzverlauf und der erste Raildruck sind vorab bestimmt und gegebenenfalls gespeichert.

Bei 50 wird ein erster Fehlerverlauf Qₑᵣᵣ des ersten normierten relativen Ist-Brennverlaufs gebildet, wozu der erste normierte relative Ist-Brennverlauf nBVᵢₛₜ von dem normierten relativen Soll-Brennverlauf nBVₛₒₗₗ subtrahiert wird. Fig. 6 zeigt beispielhaft einen ersten Fehlerverlauf Qₑᵣᵣ des ersten normierten relativen Ist-Brennverlaufs nBVᵢₛₜ aus Fig. 3.

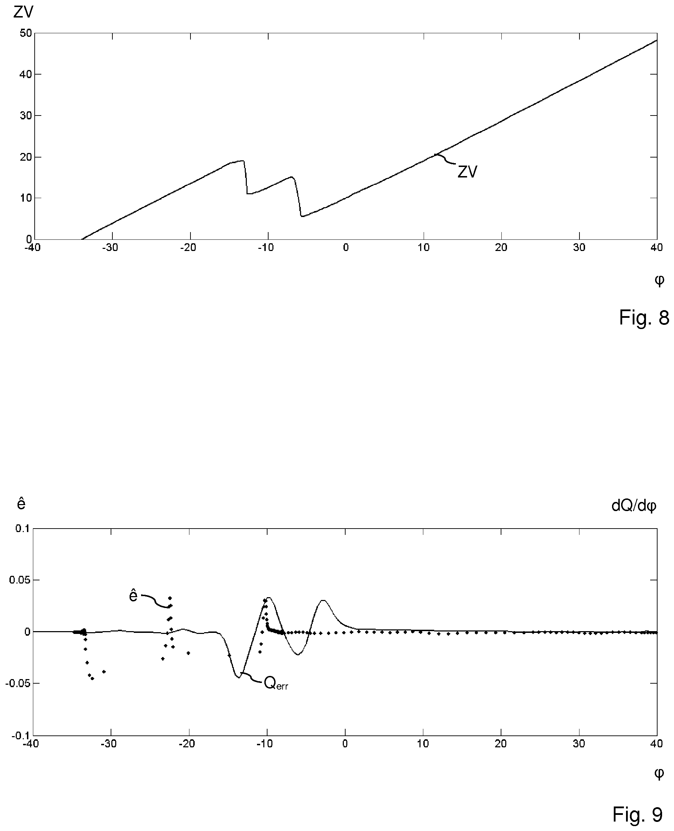

Bei 51 wird ein erster Zündverzugsverlauf ZV erhalten. Fig. 8 zeigt beispielhaft einen ersten Zündverzugsverlauf ZV des ersten normierten relativen Ist-Brennverlaufs nBVᵢₛₜ aus Fig. 3 gegenüber dem ersten normierten relativen Einspritzverlauf nEV aus Fig. 3.

Bei 52 wird der erste Fehlerverlauf Qₑᵣᵣ anhand des ersten Zündverzugsverlaufs ZV manipuliert. Dabei wird jeder Punkt des Fehlerverlaufs Qₑᵣᵣ um den zugehörigen Zündverzug verschoben. Fig. 9 zeigt beispielhaft einen ersten manipulierten Fehlerverlauf ê des ersten normierten relativen Ist-Brennverlauf nBVᵢₛₜ. Fig. 9 zeigt weiterhin den Fehlerverlauf Qₑᵣᵣ aus Fig. 6.

Bei 53 wird auf Grundlage des ersten manipulierten Fehlerverlaufs ê eine iterativ lernende Regelung durchgeführt und auf Grundlage eines ersten Ergebnisses der iterativ lernenden Regelung ein erster Zwischen-Einspritzverlauf und ein erster Zwischen-Raildruck gebildet.

Bei 54 wird ein weiterer normierter relativer Ist-Brennverlauf erhalten, dem der erste Zwischen-Einspritzverlauf und der erste Zwischen-Raildruck zugrunde liegen. Das Erhalten des weiteren normierten relativen Ist-Brennverlaufs erfolgt analog zum Erhalten des ersten normierten relativen Ist-Brennverlaufs in Schritt 22 des mit Bezug auf Fig. 2 beschriebenen Verfahrens 2 zum Ermitteln der Energieeinbringungs-Zielgröße.

Bei 55 wird ermittelt, ob der weitere normierte relative Ist-Brennverlauf dem normierten relativen Soll-Brennverlauf nBVₛₒₗₗ zumindest zu dem vorbestimmten Grad entspricht. Dazu kann beispielsweise eine Gütebestimmung, wie sie mit Bezug auf Fig. 5 im Verfahren 4 beschrieben wurde, und eine Gütebewertung durchgeführt werden.

Wenn der weitere normierte relative Ist-Brennverlauf dem normierten relativen Soll-Brennverlauf nBVₛₒₗₗ nicht zumindest zu dem vorbestimmten Grad entspricht, wird bei 50 ein weiterer Fehlerverlauf für den weiteren normierten relativen Ist-Brennverlauf ermittelt. Die Schritte 51 bis 55 werden für den weiteren normierten relativen Ist-Brennverlauf analog durchgeführt, wobei bei 51 anstelle des ersten Zündverzugsverlaufs ein weiterer Zündverzugsverlauf erhalten wird.

Wenn der weitere normierte relative Ist-Brennverlauf dem normierten relativen Soll-Brennverlauf nBVₛₒₗₗ zumindest zu dem vorbestimmten Grad entspricht, wird bei 56 der relative Zwischen-Einspritzverlauf als relativer Ziel-Einspritzverlauf ermittelt und der Zwischen-Raildruck als Ziel-Raildruck ermittelt.

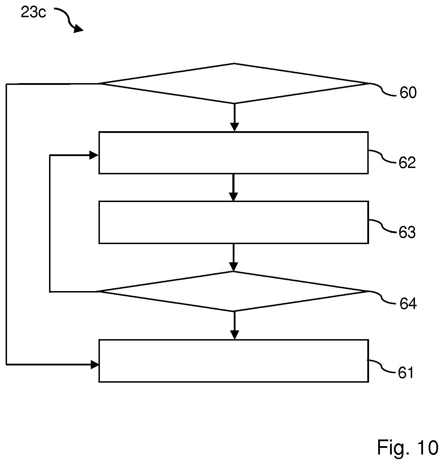

Fig. 10 zeigt ein Flussdiagramm eines dritten Verfahrens 23c zum Bestimmen des relativen Ziel-Einspritzverlaufs und des Ziel-Raildrucks, wobei mit Hilfe eines Optimierungsalgorithmus Zwischen-Einspritzverläufe bzw. Ziel-Einspritzverläufe und Zwischen-Raildrücke bzw. Ziel-Raildrücke bestimmt werden. Das Verfahren schließt wiederum an Schritt 22 des Verfahrens 2 zum Ermitteln der Energieeinbringungs-Zielgröße an und der erste normierte relative Ist-Einspritzverlauf und der ersten Raildruck sind vorab bestimmt und gegebenenfalls gespeichert.

Bei 60 wird ermittelt, ob der erste normierte relative Ist-Brennverlauf dem normierten relativen Soll-Brennverlauf zumindest zu dem vorbestimmten Grad entspricht. Dazu kann beispielsweise eine Gütebestimmung, wie sie im Verfahren 4 mit Bezug auf Fig. 5 beschrieben wurde, und eine Gütebewertung durchgeführt werden.

Wenn der erste normierte relative Ist-Brennverlauf dem normierten relativen Soll-Brennverlauf zumindest zu dem vorbestimmten Grad entspricht, wird bei 61 der erste normierte relative Einspritzverlauf als relativer Ziel-Einspritzverlauf ermittelt und der erste Raildruck als Ziel-Raildruck ermittelt.

Wenn der erste normierte relative Ist-Brennverlauf dem normierten relativen Soll-Brennverlauf nicht zumindest zu dem vorbestimmten Grad entspricht, werden bei 62 mittels eines Optimierungsalgorithmus auf Grundlage des ersten normierten relativen Einspritzverlaufs, des ersten Raildrucks und des ersten normierten relativen Ist-Brennverlaufs ein relativer Zwischen-Einspritzverlauf und ein Zwischen-Raildruck ermittelt.

Bei 63 wird ein weiterer normierter relativer Ist-Brennverlauf erhalten, dem der relative Zwischen-Einspritzverlauf und der Zwischen-Raildruck zugrunde liegen. Das Erhalten des weiteren normierten relativen Ist-Brennverlaufs erfolgt analog zum Erhalten des ersten normierten relativen Ist-Brennverlaufs in Schritt 22 des mit Bezug auf Fig. 2 beschriebenen Verfahrens 2 zum Ermitteln der Energieeinbringungs-Zielgröße.

Bei 64 wird ermittelt, ob der weitere normierte relative Ist-Brennverlauf dem normierten relativen Soll-Brennverlauf zumindest zu dem vorbestimmten Grad entspricht. Diese Ermittlung erfolgt analog zu Schritt 60.

Wenn der weitere normierte relative Ist-Brennverlauf dem normierten relativen Soll-Brennverlauf zumindest zu dem vorbestimmten Grad entspricht, wird bei 64 der erste normierte relative Einspritzverlauf als relativer Ziel-Einspritzverlauf ermittelt und der erste Raildruck als Ziel-Raildruck ermittelt.

Wenn der weitere normierte relative Ist-Brennverlauf dem normierten relativen Soll-Brennverlauf nicht zumindest zu dem vorbestimmten Grad entspricht, werden bei 62 mittels des Optimierungsalgorithmus auf Grundlage der bisherigen Verläufe und Drücke ein weiterer relativer Zwischen-Einspritzverlauf und ein weiterer Zwischen-Raildruck ermittelt. Die Schritte 63 und 64 werden für den weiteren relativen Zwischen-Einspritzverlauf und den weiteren Zwischen-Raildruck analog durchgeführt.

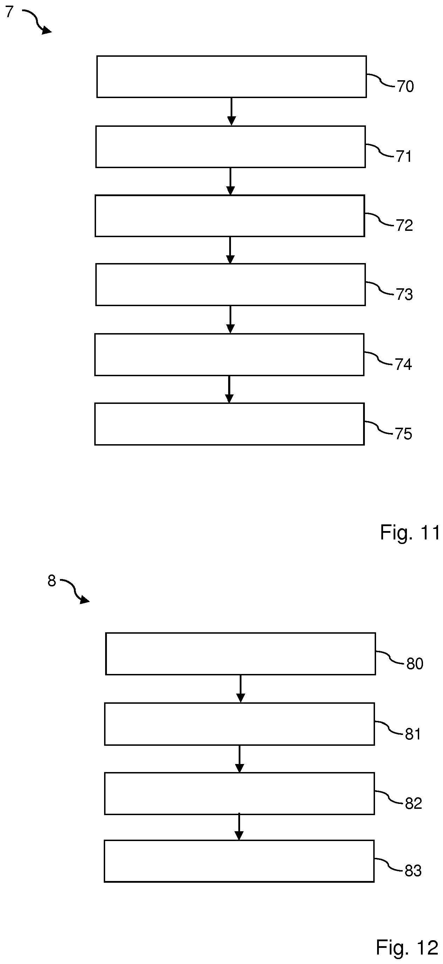

Fig. 11 zeigt ein weiteres Verfahren 7 zum Ermitteln einer Energieeinbringungs-Zielgröße.

Bei 70 wird ein normierter relativer Soll-Brennverlauf nBVₛₒₗₗ erhalten. Bei 71 wird ein erster normierter relativer Einspritzverlauf nEV und ein erster Raildruck bereitgestellt. Bei 72 wird ein erster normierter relativer Ist-Brennverlauf nBVᵢₛₜ erhalten, dem der erste normierte relative Einspritzverlauf nEV und der erste Raildruck zugrunde liegen. Die Schritte 70 bis 72 werden analog zu den Schritten 20 bis 22 des mit Bezug auf Fig. 2 beschriebene Verfahren 2 zum Ermitteln der Energieeinbringungs-Zielgröße durchgeführt.

Bei 73 werden auf Grundlage des normierten relativen Soll-Brennverlaufs nBVₛₒₗₗ und des ersten normierten relativen Ist-Brennverlaufs ein erster relativer Zwischenziel-Einspritzverlauf und ein Zwischenziel-Raildruck bestimmt, die zum Formen eines dem normierten relativen Soll-Brennverlauf zumindest zu einem ersten vorbestimmten Grad entsprechenden normierten relativen Brennverlaufs einer Verbrennungskraftmaschine ausgelegt sind. Das Bestimmen des relativen Zwischenziel-Einspritzverlaufs und des Zwischenziel-Raildrucks erfolgt analog zum Bestimmen des Ziel-Einspritzverlaufs und des Ziel-Raildrucks nach dem mit Bezug auf Fig. 4 beschriebenen Verfahren 23a. Es werden mittels einer Versuchstabelle verschiedene Kombinationen von relativen Einspritzverläufen und Raildrücken bereitgestellt und für jede Kombination wird ein normierter relativer Ist-Brennverlauf erhalten. Aus den normierten relativen Ist-Brennverläufen wird ein normierter relativer Ist-Brennverlauf ausgewählt, der dem normierten relativen Soll-Brennverlauf zumindest zu dem vorbestimmten Grad entspricht. Der dem ausgewählten normierten relativen Ist-Brennverlauf zugrunde liegende relative Einspritzverlauf und Raildruck werden als relativer Zwischenziel-Einspritzverlauf und Zwischenziel-Raildruck ermittelt. Alternativ ist es auch denkbar, den relativen Zwischenziel-Einspritzverlauf und den Zwischenziel-Raildruck mit einem der Verfahren 23b und 23c, wie sie mit Bezug auf Fig. 7 bzw. 10 beschrieben wurden, zu bestimmen.

Bei 74 wird ein weiterer normierter relativer Ist-Brennverlauf erhalten, dem der relative Zwischenziel-Einspritzverlauf und der Zwischenziel-Raildruck zugrunde liegen. Dies erfolgt analog zu Schritt 72.

Bei 75 wird auf Grundlage des normierten relativen Soll-Brennverlaufs und des weiteren normierten relativen Ist-Brennverlaufs, dem der relative Zwischenziel-Einspritzverlauf und der Zwischenziel-Raildruck zugrunde liegen, der relative Ziel-Einspritzverlauf und der Ziel-Raildruck bestimmt. Werden der relative Ziel-Einspritzverlauf und der Ziel-Raildruck einer Verbrennung der Verbrennungskraftmaschine zugrunde gelegt, führen sie zu einem normierten relativen Brennverlauf, der dem normierten relativen Soll-Brennverlauf nBVₛₒₗₗ zumindest zu einem zweiten vorbestimmten Grad entspricht. Der zweite vorbestimmte Grad ist dabei feiner als der erste vorbestimmte Grad.

Das Bestimmen des relativen Ziel-Einspritzverlaufs und des Ziel-Raildrucks erfolgt nach dem mit Bezug auf Fig. 7 beschriebenen Verfahren 23b. Dabei wird ein Fehlerverlauf gebildet, ein Zündverzugsverlauf erhalten, der Fehlerverlauf anhand des Zündverzugsverlaufs manipuliert, eine iterativ lernende Regelung durchgeführt, auf Grundlage eines Ergebnisses der iterativ lernenden Regelung ein Zwischen-Einspritzverlauf und ein Zwischen-Raildruck gebildet und ein weiterer normierter relativer Ist-Brennverlauf erhalten, dem der relative Zwischen-Einspritzverlauf und der Zwischen-Raildruck zugrunde liegen. Anschließend wird ermittelt, ob der weitere normierte relative Ist-Brennverlauf dem normierten relativen Soll-Brennverlauf zumindest zu dem zweiten vorbestimmten Grad entspricht. Wenn der weitere normierte relative Ist-Brennverlauf dem normierten relativen Soll-Brennverlauf nicht zumindest zu dem zweiten vorbestimmten Grad entspricht, wird das Vorgehen wiederholt. Alternativ ist es auch denkbar, den relativen Ziel-Einspritzverlauf und den Ziel-Raildruck mit einem der Verfahren 23a und 23c, wie sie mit Bezug auf Fig. 4 bzw. 10 beschrieben wurden, zu bestimmen.

Zu den Verfahren 2, 7 zum Ermitteln einer Energieeinbringungs-Zielgröße sei angemerkt, dass diese entkoppelt von der absoluten Lage und der absoluten umgesetzten Energie der Verbrennung durchgeführt werden und daher für einen größeren Betriebsbereich um einen Zustand herum gültige Energieeinbringungs-Zielgrößen liefern.

Nachfolgend wird mit Bezug auf Fig. 12 noch ein Verfahren 8 zum Bestimmen von absoluten Einspritzgrößen zum Betreiben einer Verbrennungskraftmaschine beschrieben. Die absoluten Einspritzgrößen werden der Steuerung der Verbrennungskraftmaschine direkt zugrunde gelegt und enthalten einen absoluten Einspritzverlauf und einen Raildruck.

Bei 80 wird ein Ansteuerbeginn einer Haupteinspritzung ermittelt, der im Wesentlichen eine gewünschte absolute Lage der Verbrennung der Verbrennungskraftmaschine zur Folge hat. Bei 81 wird eine Einspritzmenge der Haupteinspritzung ermittelt, die im Wesentlichen eine absolute umgesetzte Energie der Verbrennung der Verbrennungskraftmaschine zur Folge hat. Mit Bezug auf die Bestimmung eines Ansteuerbeginns und einer Einspritzmenge der Haupteinspritzung wird auf die Dissertation "Konzeption und Erprobung einer zylinderdruckbasierten Motormanagements für PKW-Dieselmotoren" (Jens Jeschke, 2002) verwiesen.

Bei 82 wird eine Energieeinbringungs-Zielgröße zum Formen eines einem relativen Soll-Brennverlauf zumindest zu einem vorbestimmten Grad entsprechenden relativen Brennverlaufs einer Verbrennungskraftmaschine bestimmt. Dabei wird wie oben beschrieben ein relativer Ziel-Einspritzverlauf und ein Ziel-Raildruck bestimmt.

Bei 83 wird auf Grundlage des Ansteuerbeginns und der Einspritzmenge der Haupteinspritzung und des relativen Ziel-Einspritzverlaufs ein absoluter Einspritzverlauf bestimmt, der zusammen mit dem Ziel-Raildruck zum Betreiben der Verbrennungskraftmaschine genutzt wird.

### Bezugszeichenliste

- 1: Steuervorrichtung
- 10: Mikroprozessor
- 11: Speichereinrichtung
- 12: Signaleingang
- 13: Signalausgang
- 2: Verfahren zum Ermitteln einer Energieeinbringungs-Zielgröße
- 20: Erhalten eines ersten normierten relativen Soll-Brennverlaufs
- 21: Bereitstellen eines ersten relativen Einspritzverlaufs und eines ersten Raildrucks
- 22: Erhalten eines ersten normierten relativen Ist-Brennverlaufs
- 23: Bestimmen eines relativen Ziel-Einspritzverlaufs und eines Ziel-Raildrucks
- 23a, 23b, 23c: Verfahren zum Bestimmen des relativen Ziel-Einspritzverlaufs und des Ziel-Raildrucks
- 30: Bestimmen einer Güte des ersten normierten relativen Ist-Brennverlaufs
- 31: Bereitstellen eines zweiten relativen Einspritzverlaufs und eines zweiten Raildrucks
- 32: Erhalten eines zweiten normierten relativen Ist-Brennverlaufs
- 33: Bestimmen einer Güte des zweiten normierten relativen Ist-Brennverlaufs
- 34: Wiederholen der Schritte 31 bis 33 auf Grundlage weiterer Kombinationen aus normierten relativen Einspritzverläufen und Raildrücken
- 35: Auswählen eines normierten relativen Ist-Brennverlaufs durch Vergleich der bestimmten Güten
- 36: Ermittelt, ob die Güte des ausgewählten normierten relativen Ist-Brennverlaufs einer vorgegebenen Güte entspricht oder besser als diese ist
- 37: Ermitteln des dem ausgewählten normierten relativen Ist-Brennverlauf zugrunde liegenden relativen Ziel-Einspritzverlaufs und Ziel-Raildrucks
- 4: Verfahren zur Gütebestimmung
- 40: Bilden eines Fehlerverlaufs
- 41: Ermitteln der Güte auf Grundlage des Fehlerverlaufs
- 50: Bilden eines ersten Fehlerverlaufs
- 51: Erhalten eines ersten Zündverzugsverlaufs
- 52: Manipulieren des Fehlerverlaufs anhand des ersten Zündverzugsverlaufs
- 53: Durchführen einer iterativ lernenden Regelung und Bilden des relativen Zwischen-Einspritzverlaufs und des Zwischen-Raildrucks
- 54: Erhalten eines weiteren normierten relativen Ist-Brennverlaufs
- 55: Ermitteln, ob der weitere normierte relative Ist-Brennverlauf dem normierten relativen Soll-Brennverlauf zumindest zu dem vorbestimmten Grad entspricht
- 56: Ermitteln des relativen Ziel-Einspritzverlaufs und des Ziel-Raildrucks
- 60: Ermitteln, ob der erste normierte relative Ist-Brennverlauf dem normierten relativen Soll-Brennverlauf zumindest zu dem vorbestimmten Grad entspricht
- 61: Bestimmen des relativen Ziel-Einspritzverlaufs und des Ziel-Raildrucks
- 62: Ermitteln eines relativen Zwischen-Einspritzverlaufs und eines Zwischen-Raildrucks
- 63: Erhalten eines weiteren normierten relativen Ist-Brennverlaufs
- 64: Ermitteln, ob der weitere normierte relative Ist-Brennverlauf dem normierten relativen Soll-Brennverlauf zumindest zu dem vorbestimmten Grad entspricht
- 7: Verfahren zum Ermitteln einer Energieeinbringungs-Zielgröße
- 70: Erhalten eines normierten relativen Soll-Brennverlaufs
- 71: Bereitstellen eines ersten normierten relativen Einspritzverlaufs und eines ersten Raildrucks
- 72: Erhalten eines ersten normierten relativen Ist-Brennverlaufs
- 73: Bestimmen eines relativen Zwischenziel-Einspritzverlaufs und eines Zwischenziel-Raildrucks
- 74: Erhalten eines weiteren normierten relativen Ist-Brennverlaufs
- 75: Bestimmen des relativen Ziel-Einspritzverlaufs und des Ziel-Raildrucks
- 8: Verfahren zum Bestimmen von absoluten Einspritzgrößen
- 80: Ermitteln eines Ansteuerbeginns der Haupteinspritzung
- 81: Ermitteln einer Einspritzmenge der Haupteinspritzung
- 82: Bestimmen einer Energieeinbringungs-Zielgröße
- 83: Bestimmen eines absoluten Einspritzverlaufs
- ZEV: Ziel-Einspritzverlauf
- ZR: Ziel-Raildruck
- nEV: normierter relativer Einspritzverlauf
- nBVₛₒₗₗ: normierter relativer Soll-Brennverlauf
- nBVᵢₛₜ: normierter relativer Ist-Brennverlauf
- ϕ: Kurbelwellenwinkel
- ê: manipulierter Fehlerverlauf
- Qₑᵣᵣ: Fehlerverlauf
- ZV: Zündverzugsverlauf
- Q: Wärmemenge
- dQ/dϕ: Ableitung Wärmemenge
- dm/dϕ: Massenstrom

## Patentansprüche

1. Verfahren zum Ermitteln einer Energieeinbringungs-Zielgröße zum Formen eines einem relativen Soll-Energieumsetzungsverlauf (nBVₛₒₗₗ) zumindest zu einem vorbestimmten Grad entsprechenden relativen Energieumsetzungsverlaufs einer Verbrennungskraftmaschine, umfassend:
Erhalten (20, 70) des relativen Soll-Energieumsetzungsverlaufs (nBVₛₒₗₗ) der Verbrennungskraftmaschine, wobei der relative Soll-Energieumsetzungsverlauf (nBVₛₒₗₗ) auf einem absoluten Soll-Energieumsetzungsverlauf basiert, der mittels einer Transformationsvorschrift in den relativen Soll-Energieumsetzungsverlauf (nBVₛₒₗₗ) überführt ist, wobei die Transformationsvorschrift eine Skalierung des absoluten Soll-Energieumsetzungsverlaufs und/oder eine Verschiebung des absoluten Soll-Energieumsetzungsverlaufs enthält;
Bereitstellen (21, 71) einer Ist-Energieeinbringungsgröße;
Erhalten (22, 72) eines relativen Ist-Energieumsetzungsverlaufs (nBVᵢₛₜ) der Verbrennungskraftmaschine, dem die bereitgestellte Ist-Energieeinbringungsgröße zugrunde liegt, wobei der relative Ist-Energieumsetzungsverlauf (nBVᵢₛₜ) auf einem gemessenen Ist-Energieumsetzungsverlauf basiert, der mittels der Transformationsvorschrift in den relativen Ist-Energieumsetzungsverlauf überführt ist; und
Ermitteln (23, 23a, 23b, 23c, 75) der Energieeinbringungs-Zielgröße auf Grundlage des relativen Soll-Energieumsetzungsverlaufs (nBVₛₒₗₗ) und des relativen Ist-Energieumsetzungsverlaufs (nBVᵢₛₜ);
weiterhin umfassend:
Bewerten (36, 55, 60, 64) des relativen Ist-Energieumsetzungsverlaufs (nBVᵢₛₜ) im Vergleich zu dem relativen Soll-Energieumsetzungsverlauf (nBVₛₒₗₗ),
wobei beim Ermitteln (23, 23a, 23b, 23c, 75) der Energieeinbringungs-Zielgröße die Ist-Energieeinbringungsgröße als Energieeinbringungs-Zielgröße ermittelt wird, wenn beim Bewerten (36, 55, 60, 64) des relativen Ist-Energieumsetzungsverlaufs (nBVᵢₛₜ) festgestellt wird, dass der relative Ist-Energieumsetzungsverlauf (nBVᵢₛₜ) eine vorgegebene Eigenschaft aufweist,
wobei das Bewerten (55) des relativen Ist-Energieumsetzungsverlaufs (nBVᵢₛₜ) das Vergleichen des relativen Ist-Energieumsetzungsverlaufs (nBVᵢₛₜ) mit dem relativen Soll-Energieumsetzungsverlauf (nBVₛₒₗₗ) umfasst; und
das Bereitstellen (21, 71) der Ist-Energieeinbringungsgröße umfasst:
Bilden (50) eines Vergleichsergebnisses des Vergleichens des relativen Ist-Energieumsetzungsverlaufs (nBVᵢₛₜ) mit dem relativen Soll-Energieumsetzungsverlauf (nBVₛₒₗₗ); und
Erhalten (51) eines Zündverzugsverlaufs (ZV), wobei der Zündverzugsverlauf (ZV) einen zeitlichen Verzug zwischen einer Energieeinbringung und einer Energieumsetzung beschreibt.

2. Verfahren nach Anspruch 1,
wobei die Energieeinbringungs-Zielgröße diskrete Parameter zur Ansteuerung eines Einspritzsystems, einen Raildruck und/oder zur Ansteuerung des Einspritzsystems verwendbare zeitliche Verläufe bezogen auf den dem relativen Soll-Energieumsetzungsverlauf zumindest zu dem vorbestimmten Grad entsprechenden relativen Energieumsetzungsverlauf enthält; und/oder
wobei die Ist-Energieeinbringungsgröße diskrete Parameter zur Ansteuerung des Einspritzsystems, einen Raildruck und/oder zur Ansteuerung des Einspritzsystems verwendete zeitliche Verläufe bezogen auf den relativen Ist-Energieumsetzungsverlauf enthält.

3. Verfahren nach Anspruch 1 oder 2, wobei
beim Bewerten (36, 55, 60, 64) des relativen Ist-Energieumsetzungsverlaufs (nBVᵢₛₜ) eine Güte des relativen Ist-Energieumsetzungsverlaufs (nBVᵢₛₜ) im Vergleich zu dem relativen Soll-Energieumsetzungsverlauf (nBVₛₒₗₗ) bestimmt und eine Gütebewertung durchgeführt wird und
beim Ermitteln (23, 23a, 23b, 23c, 75) der Energieeinbringungs-Zielgröße die Ist-Energieeinbringungsgröße als Energieeinbringungs-Zielgröße ermittelt wird, wenn beim Bewerten (36, 55, 60, 64) des relativen Ist-Energieumsetzungsverlaufs (nBVᵢₛₜ) festgestellt wird, dass die Güte einer vorgegebenen Güte entspricht oder besser als die vorgegebene Güte ist.

4. Verfahren nach einem der Ansprüche 1 bis 3, weiterhin umfassend:
Bereitstellen einer weiteren Ist-Energieeinbringungsgröße, wenn beim Bewerten (36, 55, 60, 64) des relativen Ist-Energieumsetzungsverlaufs (nBVᵢₛₜ) festgestellt wird, dass der relative Ist-Energieumsetzungsverlauf (nBVᵢₛₜ) die vorgegebene Eigenschaft nicht aufweist;
Erhalten eines weiteren relativen Ist-Energieumsetzungsverlaufs der Verbrennungskraftmaschine, dem die bereitgestellte weitere Ist-Energieeinbringungsgröße zugrunde liegt; und
Bewerten des weiteren relativen Ist-Energieumsetzungsverlaufs im Vergleich zu dem relativen Soll-Energieumsetzungsverlauf (nBVₛₒₗₗ),
wobei beim Ermitteln (23, 23a, 23b, 23c, 75) der Energieeinbringungs-Zielgröße die weitere Ist-Energieeinbringungsgröße als Energieeinbringungs-Zielgröße ermittelt wird, wenn beim Bewerten des weiteren relativen Ist-Energieumsetzungsverlaufs festgestellt wird, dass der weitere relative Ist-Energieumsetzungsverlauf eine vorgegebene Eigenschaft aufweist.

5. Verfahren nach einem der Ansprüche 1 bis 4, wobei
beim Bereitstellen (21, 71) der Ist-Energieeinbringungsgröße mehrere Ist-Energieeinbringungsgrößen bereitgestellt werden;
beim Erhalten (22, 72) des relativen Ist-Energieumsetzungsverlaufs der Verbrennungskraftmaschine zu jeder bereitgestellten Ist-Energieeinbringungsgröße ein relativer Ist-Energieumsetzungsverlauf erhalten wird;
beim Bewerten (36, 60, 64) des relativen Ist-Energieumsetzungsverlaufs (nVBᵢₛₜ) jeder relative Ist-Energieumsetzungsverlaufs im Vergleich zu dem relativen Soll-Energieumsetzungsverlaufs (nBVₛₒₗₗ) bewertet wird; und
beim Ermitteln (23a, 23c) der Energieeinbringungs-Zielgröße
ein relativer Ist-Energieumsetzungsverlauf (nBVᵢₛₜ) der relativen Ist-Energieumsetzungsverläufe ausgewählt wird, der die vorgegebene Eigenschaft aufweist, und
die dem ausgewählten relativen Ist-Energieumsetzungsverlauf zugrunde liegenden Ist-Energieeinbringungsgröße als Energieeinbringungs-Zielgröße ermittelt wird.

6. Verfahren nach einem der Ansprüche 1 bis 4, wobei
das Bereitstellen (21, 71) der Ist-Energieeinbringungsgröße weiterhin umfasst:
Manipulieren (52) des Vergleichsergebnisses anhand des erhaltenen Zündverzugsverlaufs (ZV);
Durchführen (53) einer iterativ lernenden Regelung auf Grundlage des manipulierten Vergleichsergebnisses; und
Bilden (54) der Ist-Energieeinbringungsgröße mit Hilfe einer Bildungsvorschrift auf Grundlage eines Ergebnisses der iterativ lernenden Regelung.

7. Verfahren nach einem der Ansprüche 1 bis 6, wobei das Bereitstellen (21, 71) der Ist-Energieeinbringungsgröße umfasst:
Bereitstellen eines Modells zum Bestimmen der Ist-Energieeinbringungsgröße; und
Bestimmen der Ist-Energieeinbringungsgröße mittels des bereitgestellten Modells.

8. Verfahren zum Bestimmen einer absoluten Energieeinbringungsgröße zum Betreiben einer Verbrennungskraftmaschine, umfassend:
Ermitteln (80) eines ersten Teilverlaufsabschnitts eines relativen Energieeinbringungsverlaufs, über den die absolute Lage eines Energieumsetzungsverlaufs einstellbar ist;
Ermitteln (81) eines zweiten Teilverlaufsabschnitts des relativen Energieeinbringungsverlaufs, über den die absolute umgesetzte Energie eines Energieumsetzungsverlaufs einstellbar ist;
Bestimmen (82) einer Energieeinbringungs-Zielgröße gemäß einem Verfahren nach einem der Ansprüche 1 bis 7; und
Ermitteln (83) der absoluten Energieeinbringungsgröße zum Betreiben der Verbrennungskraftmaschine auf Grundlage des ersten Teilverlaufsabschnitts, des zweiten Teilverlaufsabschnitts und der Energieeinbringungs-Zielgröße.

9. Steuervorrichtung zum Ermitteln einer Energieeinbringungs-Zielgröße zum Formen eines einem relativen Soll-Energieumsetzungsverlauf zumindest zu einem vorbestimmten Grad entsprechenden relativen Energieumsetzungsverlaufs einer Verbrennungskraftmaschine, die dazu ausgebildet ist, ein Verfahren nach einem der Ansprüche 1 bis 7 auszuführen.

## Claims

1. Method for ascertaining an energy introduction target variable for forming a relative energy conversion profile, which at least to a predetermined degree corresponds to a relative setpoint energy conversion profile (nBVₛₒₗₗ), of an internal combustion engine, comprising:
obtaining (20, 70) the relative setpoint energy conversion profile (nBVₛₒₗₗ) of the internal combustion engine, wherein the relative setpoint energy conversion profile (nBVₛₒₗₗ) is based on an absolute setpoint energy conversion profile that has been transformed by means of a transformation rule into the relative setpoint energy conversion profile (nBVₛₒₗₗ), wherein the transformation rule comprises a scaling of the absolute setpoint energy conversion profile and/or an offsetting of the absolute setpoint energy conversion profile;
providing (21, 71) an actual energy introduction variable;
obtaining (22, 72) a relative actual energy conversion profile (nBVᵢₛₜ) of the internal combustion engine, which is based on the provided actual energy introduction variable, wherein the relative actual energy conversion profile (nBVᵢₛₜ) is based on a measured actual energy conversion profile that has been transformed by means of the transformation rule into the relative actual energy conversion profile; and
ascertaining (23, 23a, 23b, 23c, 75) the energy introduction target variable on the basis of the relative setpoint energy conversion profile (nBVₛₒₗₗ) and the relative actual energy conversion profile (nBVᵢₛₜ) ;
furthermore comprising:
evaluating (36, 55, 60, 64) the relative actual energy conversion profile (nBVᵢₛₜ) in relation to the relative setpoint energy conversion profile (nBVₛₒₗₗ),
wherein, in the ascertainment (23, 23a, 23b, 23c, 75) of the energy introduction target variable, the actual energy introduction variable is ascertained as energy introduction target variable if, in the evaluation (36, 55, 60, 64) of the relative actual energy conversion profile (nBVᵢₛₜ), it is identified that the relative actual energy conversion profile (nBVᵢₛₜ) has a predefined characteristic,
wherein the evaluation (55) of the relative actual energy conversion profile (nBVᵢₛₜ) comprises the comparison of the relative actual energy conversion profile (nBVᵢₛₜ) with the relative setpoint energy conversion profile (nBVₛₒₗₗ); and
the provision (21, 71) of the actual energy introduction variable comprises:
forming (50) a comparison result of the comparison of the relative actual energy conversion profile (nBVᵢₛₜ) with the relative setpoint energy conversion profile (nBVₛₒₗₗ) ; and
obtaining (51) an ignition delay profile (ZV), wherein the ignition delay profile (ZV) describes a time delay between an energy introduction and an energy conversion.

2. Method according to Claim 1,
wherein the energy introduction target variable comprises discrete parameters for the control of an injection system, a rail pressure and/or profiles with respect to time, which are usable for the control of the injection system, in relation to the relative energy conversion profile which at least to the predetermined degree corresponds to the relative setpoint energy conversion profile; and/or
wherein the actual energy introduction variable comprises discrete parameters for the control of the injection system, a rail pressure and/or profiles with respect to time, which are used for the control of the injection system, in relation to the relative actual energy conversion profile.

3. Method according to Claim 1 or 2, wherein
in the evaluation (36, 55, 60, 64) of the relative actual energy conversion profile (nBVᵢₛₜ), a quality of the relative actual energy conversion profile (nBVᵢₛₜ) in relation to the relative setpoint energy conversion profile (nBVₛₒₗₗ) is determined and a quality evaluation is performed, and
in the ascertainment (23, 23a, 23b, 23c, 75) of the energy introduction target variable, the actual energy introduction variable is ascertained as energy introduction target variable if, in the evaluation (36, 55, 60, 64) of the relative actual energy conversion profile (nBVᵢₛₜ), it is identified that the quality corresponds to a predefined quality or is better than the predefined quality.

4. Method according to any of Claims 1 to 3, furthermore comprising:
providing a further actual energy introduction variable if, in the evaluation (36, 55, 60, 64) of the relative actual energy conversion profile (nBVᵢₛₜ), it is identified that the relative actual energy conversion profile (nBVᵢₛₜ) does not have the predefined characteristic;
obtaining a further relative actual energy conversion profile of the internal combustion engine which is based on the provided further actual energy introduction variable; and
evaluating the further relative actual energy conversion profile in relation to the relative setpoint energy conversion profile (nBVₛₒₗₗ),
wherein, in the ascertainment (23, 23a, 23b, 23c, 75) of the energy introduction target variable, the further actual energy introduction variable is ascertained as energy introduction target variable if, in the evaluation of the further relative actual energy conversion profile, it is identified that the further relative actual energy conversion profile has a predefined characteristic.

5. Method according to any of Claims 1 to 4, wherein,
in the provision (21, 71) of the actual energy introduction variable, multiple actual energy introduction variables are provided;
in the obtaining (22, 72) of the relative actual energy conversion profile of the internal combustion engine, a relative actual energy conversion profile is obtained for each provided actual energy introduction variable;
in the evaluation (36, 60, 64) of the relative actual energy conversion profile (nBVᵢₛₜ), each relative actual energy conversion profile is evaluated in relation to the relative setpoint energy conversion profile (nBVₛₒₗₗ) ; and
in the ascertainment (23a, 23c) of the energy introduction target variable,
a relative actual energy conversion profile (nBVᵢₛₜ) which has the predefined characteristic is selected from the relative actual energy conversion profiles, and
the actual energy introduction variable based on the selected relative actual energy conversion profile is ascertained as energy introduction target variable.

6. Method according to any of Claims 1 to 4, wherein
the provision (21, 71) of the actual energy introduction variable furthermore comprises:
manipulating (52) the comparison result on the basis of the obtained ignition delay profile (ZV);
performing (53) iteratively learning closed-loop control on the basis of the manipulated comparison result; and
forming (54) the actual energy introduction variable with the aid of a formation rule on the basis of a result of the iteratively learning closed-loop control.

7. Method according to any of Claims 1 to 6, wherein the provision (21, 71) of the actual energy introduction variable comprises:
providing a model for the determination of the actual energy introduction variable; and
determining the actual energy introduction variable by means of the provided model.

8. Method for determining an absolute energy introduction variable for the operation of an internal combustion engine, comprising:
ascertaining (80) a first partial profile section of a relative energy introduction profile, by means of which the absolute position of an energy conversion profile can be set;
ascertaining (81) a second partial profile section of the relative energy introduction profile, by means of which the absolute converted energy of an energy conversion profile can be set;
determining (82) an energy introduction target variable in accordance with a method according to any of Claims 1 to 7; and
ascertaining (83) the absolute energy introduction profile for the operation of the internal combustion engine on the basis of the first partial profile section, the second partial profile section and the energy introduction target variable.

9. Control device for ascertaining an energy introduction target variable for forming a relative energy conversion profile, which at least to a predetermined degree corresponds to a relative setpoint energy conversion profile, of an internal combustion engine, which control device is designed to carry out a method according to any of Claims 1 to 7.

## Revendications

1. Procédé de détermination d'une grandeur d'apport d'énergie de consigne en vue de former une courbe de conversion d'énergie de consigne relative (nBVₛₒₗₗ) correspondant au moins à un degré prédéterminé à une courbe de conversion d'énergie relative d'un moteur à combustion interne, comprenant :
l'obtention (20, 70) de la courbe de conversion d'énergie relative de consigne (nBVₛₒₗₗ) du moteur à combustion interne,
dans laquelle la courbe de conversion d'énergie relative de consigne (nBVₛₒₗₗ) se base sur une courbe de conversion d'énergie absolue de consigne, qui est convertie en une courbe de conversion d'énergie relative de consigne (nBVₛₒₗₗ) au moyen d'une règle de transformation, dans lequel la règle de transformation comporte une mise à l'échelle de la courbe de conversion d'énergie absolue de consigne et/ou un décalage de la courbe de conversion d'énergie absolue de consigne ;
la fourniture (21, 71) d'une grandeur d'apport d'énergie réelle ;
l'obtention (22, 72) d'une courbe de conversion d'énergie relative réelle (nBVᵢₛₜ) du moteur à combustion interne, laquelle se base sur la grandeur d'apport d'énergie réelle fournie, dans lequel la courbe de conversion d'énergie relative réelle (nBVᵢₛₜ) se base sur une courbe de conversion d'énergie réelle mesurée qui est convertie en la courbe de conversion d'énergie relative réelle au moyen de la règle de transformation ;
et la détermination (23, 23a, 23b, 23c, 75) de la grandeur d'apport d'énergie de consigne en se basant sur la courbe de conversion d'énergie relative de consigne (nBVₛₒₗₗ) et la courbe de conversion d'énergie relative réelle (nBVᵢₛₜ) ;
comprenant en outre :
l'évaluation (36, 55, 60, 64) de la courbe de conversion d'énergie relative réelle (nBVᵢₛₜ) par rapport à la courbe de conversion d'énergie relative de consigne (nBVₛₒₗₗ), dans lequel, lors de la détermination (23, 23a, 23b, 23c, 75) de la grandeur d'apport d'énergie de consigne, la grandeur d'apport d'énergie réelle est déterminée comme étant la grandeur d'apport d'énergie de consigne si, lors de l'évaluation (36, 55, 60, 64) de la courbe de conversion d'énergie relative réelle (nBVᵢₛₜ), il est déterminé que la courbe de conversion d'énergie relative réelle (nBVᵢₛₜ) présente une propriété prédéterminée, dans lequel l'évaluation (55) de la courbe de conversion d'énergie relative réelle (nBVᵢₛₜ) comprend la comparaison de la courbe de conversion d'énergie relative réelle (nBVᵢₛₜ) avec la courbe de conversion d'énergie relative de consigne (nBVₛₒₗₗ) ; et
la fourniture (21, 71) de la grandeur d'apport d'énergie réelle comprend :
la formation (50) d'un résultat de comparaison en comparant la courbe de conversion d'énergie relative réelle (nBVᵢₛₜ) avec la courbe de conversion d'énergie relative de consigne (nBVₛₒₗₗ) ; et
l'obtention (51) d'une courbe de retard d'allumage (ZV), dans lequel la courbe de retard d'allumage (ZV) décrit un retard entre un apport d'énergie et une conversion d'énergie.

2. Procédé selon la revendication 1,
dans lequel la grandeur d'apport d'énergie de consigne comporte des paramètres discrets pour la commande d'un système d'injection, une pression de rail et/ou des courbes temporelles pouvant être utilisées pour la commande du système d'injection par rapport à la courbe de conversion d'énergie relative correspondant au moins au degré prédéterminé à la courbe de conversion d'énergie relative de consigne ; et/ou
dans lequel la grandeur d'apport d'énergie réelle comporte des paramètres discrets pour la commande du système d'injection, une pression de rail et/ou des courbes temporelles utilisées pour la commande du système d'injection par rapport à la courbe de conversion d'énergie relative réelle.

3. Procédé selon la revendication 1 ou 2, dans lequel, lors de l'évaluation (36, 55, 60, 64) de la courbe de conversion d'énergie relative réelle (nBVᵢₛₜ), une qualité de la courbe de conversion d'énergie relative réelle (nBVᵢₛₜ) est déterminée par rapport à la courbe de conversion d'énergie relative de consigne (nBVₛₒₗₗ) et une évaluation de la qualité est effectuée et,
lors de la détermination (23, 23a, 23b, 23c, 75) de la grandeur d'apport d'énergie de consigne, la grandeur d'apport d'énergie réelle est déterminée comme étant la grandeur d'apport d'énergie de consigne si, lors de l'évaluation (36, 55, 60, 64) de la courbe de conversion d'énergie relative réelle (nBVᵢₛₜ), il est déterminé que la qualité correspond à une qualité prédéterminée ou est supérieure à la qualité prédéterminée.

4. Procédé selon l'une des revendications 1 à 3, comprenant en outre :
la fourniture d'une autre grandeur d'apport d'énergie réelle si, lors de l'évaluation (36, 55, 60, 64) de la courbe de conversion d'énergie relative réelle (nBVᵢₛₜ), il est déterminé que la courbe de conversion d'énergie relative réelle (nBVᵢₛₜ) ne présente pas la qualité prédéterminée ;
l'obtention d'une autre courbe de conversion d'énergie relative réelle du moteur à combustion interne, laquelle se base sur l'autre grandeur d'apport d'énergie réelle fournie ; et
l'évaluation de l'autre courbe de conversion d'énergie relative réelle par comparaison avec la courbe de conversion d'énergie relative de consigne (nBVₛₒₗₗ),
dans lequel, lors de la détermination (23, 23a, 23b, 23c, 75) de la grandeur d'apport d'énergie de consigne, l'autre grandeur d'apport d'énergie réelle est déterminée en tant que grandeur d'apport d'énergie de consigne si, lors de l'évaluation de l'autre courbe de conversion d'énergie relative réelle, il est déterminé que l'autre courbe de conversion d'énergie relative réelle présente une propriété prédéterminée.

5. Procédé selon l'une des revendications 1 à 4, dans lequel,
lors de la fourniture de la grandeur d'apport d'énergie réelle, une pluralité de grandeurs d'apport d'énergie réelles sont fournies (21, 71) ;
lors de l'obtention (22, 72) de la courbe de conversion d'énergie relative réelle du moteur à combustion interne pour chaque grandeur d'apport d'énergie réelle fournie, une courbe de conversion d'énergie relative réelle est obtenue ;
lors de l'évaluation (36, 60, 64) de la courbe de conversion d'énergie relative réelle (nBVᵢₛₜ), chaque courbe de conversion d'énergie relative réelle est évaluée par comparaison avec la courbe de conversion d'énergie relative de consigne (nBVₛₒₗₗ) ; et
lors de la détermination (23a, 23c) de la grandeur d'apport d'énergie de consigne, une courbe de conversion d'énergie relative réelle (nBVᵢₛₜ), parmi les courbes de conversion d'énergie relatives réelles présentant la propriété prédéterminée, est sélectionnée, et
la grandeur d'apport d'énergie réelle qui est à la base de la courbe de conversion d'énergie relative réelle sélectionnée est déterminée en tant que grandeur d'apport d'énergie de consigne.

6. Procédé selon l'une des revendications 1 à 4, dans lequel la fourniture (21, 71) de la grandeur d'apport d'énergie réelle comprend en outre :
la manipulation (52) du résultat de comparaison sur la base de la courbe de retard d'allumage (ZV) obtenue ;
l'exécution (53) d'une régulation d'apprentissage itérative basée sur le résultat de comparaison manipulé ; et
la formation (54) de la grandeur d'apport d'énergie réelle à l'aide d'une règle de formation sur la base du résultat de la régulation d'apprentissage itérative.

7. Procédé selon l'une des revendications 1 à 6, dans lequel la fourniture (21, 71) de la grandeur d'apport d'énergie réelle comprend :
la fourniture d'un modèle pour la détermination de la grandeur d'apport d'énergie réelle ; et
la détermination de la grandeur d'apport d'énergie réelle au moyen du modèle fourni.

8. Procédé de détermination d'une grandeur d'apport d'énergie absolue pour le fonctionnement d'un moteur à combustion interne, comprenant :
la détermination (80) d'une première section de courbe partielle d'une courbe d'apport d'énergie relative par le biais de laquelle la position absolue d'une courbe de conversion d'énergie peut être réglée ;
la détermination (81) d'une deuxième section de courbe partielle de la courbe d'apport d'énergie relative, par le biais de laquelle l'énergie convertie absolue d'une courbe de conversion d'énergie peut être réglée ;
la détermination (82) d'une grandeur d'apport d'énergie de consigne conformément à un procédé selon l'une des revendications 1 à 7 ; et
la détermination (83) de la grandeur d'apport d'énergie absolue pour le fonctionnement du moteur à combustion interne sur la base de la première section de courbe partielle, de la deuxième section de courbe partielle et de la grandeur d'apport d'énergie de consigne.

9. Dispositif de commande pour la détermination d'une grandeur d'apport d'énergie de consigne pour former une courbe de conversion d'énergie relative correspondant au moins à un degré prédéterminé à une courbe de conversion d'énergie relative de consigne d'un moteur à combustion interne, lequel dispositif de commande est conçu pour mettre en œuvre un procédé selon l'une des revendications 1 à 7.
